# EUROPEAN PATENT SPECIFICATION

(11) **EP 4 350 540 B1**
(45) Date of publication and mention of the grant of the patent: **28.05.2025**
(21) Application number: 23775949.3
(22) Date of filing: 26.04.2023
(51) Int. Cl.: G06F 21/43, H04W 12/77, G06F 21/36, H04L 9/40, H04W 12/06

(54) **ACCOUNT LOGIN METHOD AND ELECTRONIC DEVICE**
KONTOANMELDUNGSVERFAHREN UND ELEKTRONISCHE VORRICHTUNG
PROCÉDÉ DE CONNEXION DE COMPTE ET DISPOSITIF ÉLECTRONIQUE

(30) Priority: 19.08.2022 CN 202210998425
(43) Date of publication of application: 10.04.2024
(73) Proprietor: Honor Device Co., Ltd., Shenzhen, Guangdong 518040 (CN)
(72) Inventor: LIU, Shicong, Shenzhen, Guangdong 518040 (CN)
(74) Representative: Epping - Hermann - Fischer
(86) International application number: PCT/CN2023/090855
(87) International publication number: WO 2024/037032

(56) References cited:
- EP-A1- 4 261 665
- WO-A1-2022/032979
- CN-A- 106 357 672
- CN-A- 110 650 129
- CN-A- 111 783 055
- CN-A- 112 417 420
- CN-A- 112 417 421
- CN-A- 114 006 712
- CN-A- 114 764 286
- CN-A- 114 844 657
- CN-A- 114 861 154
- CN-A- 115 080 941
- US-A1- 2010 151 823
- US-A1- 2017 093 828
- US-A1- 2023 305 680

## Description

### TECHNICAL FIELD

This application relates to the field of terminal technologies, and in particular, to an account login method and an electronic device.

### BACKGROUND

With development of electronic devices, users own more types of electronic devices, and one user may own a plurality of electronic devices such as a mobile phone and a personal computer (personal computer, PC). Different electronic devices can provide a user with some same services. For example, a same application (application, App) may be installed in different electronic devices, and a user can use different versions (for example, a web page version and a mobile phone APP version) of a same App in different electronic devices by logging in to an account of the user. However, at present, when logging in to an account in some electronic devices, especially a non-common electronic device of a user, the user is usually required to perform a specific operation on a common device (for example, a mobile phone) to assist in verification. This requires the user to simultaneously perform operations on at least two electronic devices, and consequently login efficiency is low, easily causing poor user experience.

US 2010/151823 A1 describes a system for managing at least one service access authentication data item, including a device for accessing at least one service. The system also includes a mobile terminal including a mechanism managing the authentication data item and an identifier of the service, a communication interface between the access device and the management mechanism, and a software interface configured to determine the service identifier and to utilize the management mechanism, via the communication interface, on access to the service. Patent applications CN 114 764 286 A and CN 107 623 690 A disclose authentication methods using a mobile phone as verification device.

### SUMMARY

Embodiments of this application provide an account login method. In this method, through interaction between a login device and a verification device on login information of a web page account, a user can automatically log in to the web page account without operating the verification device.

According to a first aspect, an account login method is provided. The method is applied to a login device. A communication connection is established between the login device and a verification device, and the method includes:
displaying a login interface of a target website, wherein the login interface is a display interface in a browser of the login device; receiving a first preset operation input based on the login interface, where the first preset operation is used to choose to log in to the target website in an SMS message verification manner;
querying a mobile number from the verification device in response to the first preset operation, wherein the mobile number is a login account of the target website;
obtaining the mobile number sent by the verification device, and filling an account filling position in the login interface of the browser with the mobile number;
sending a trigger message to a login filling plug-in of the login device, wherein the trigger message is used to indicate that the mobile number has been filled,
querying verification information corresponding to the target website from the verification device, wherein the verification information is an SMS verification code corresponding to the mobile number;
obtaining the verification information corresponding to the target website;
filling a verification information filling position in the login interface of the browser with the verification information; and
receiving a second preset operation, and logging in to the target website by using the browser in response to the second preset operation, where the second preset operation is an operation that is input by the user and that is used to confirm login to the target website. According to the account login method provided in this implementation, when a user logs in to an account on a login device, the login device automatically obtains verification information corresponding to the account from a verification device, without requiring the user to manually view the verification information on the verification device and input the verification information to the login device, thereby improving convenience of logging in to the account on the login device and improving user experience.

With reference to the first aspect, in some implementations of the first aspect, when there are a plurality of mobile numbers, the obtaining the mobile number sent by the verification device, and filling an account filling position in the login interface of the browser with the mobile number specifically includes:
obtaining the plurality of mobile numbers sent by the verification device;
displaying the plurality of mobile numbers in the login interface of the browser;
receiving a third preset operation input by the user, where the third preset operation is used to select a target mobile number used as the login account from the plurality of mobile numbers; and
filling the account filling position in the login interface of the browser with the target account in response to the third preset operation.

With reference to the first aspect, in some implementations of the first aspect, the method further includes:
before the account filling position in the login interface of the browser is filled with the mobile number, displaying, by the login interface of the browser, a preset waiting interface; or
filling the verification information filling position in the login interface of the browser with the verification information, and displaying, by the login interface of the browser, a preset waiting interface.

With reference to the first aspect, in some implementations of the first aspect, when the target manner further comprises a QR code scanning manner, the method further includes:
obtaining a corresponding QR code image in response to the first preset operation in which the user chooses to log in to the target website in the QR code scanning manner;
sending a code scanning notification message to the verification device, where the code scanning notification message includes the QR code image and an identifier corresponding to the target website; and
obtaining a scanning result of the verification device for the QR code image, and providing the login information for the target website by using the browser based on the scanning result.

With reference to the first aspect, in some implementations of the first aspect, the method further includes:
when the scanning result indicates that scanning performed by the verification device on the QR code image succeeds, displaying first prompt information by using the login interface of the browser, where the first prompt information is used to indicate that the QR code scanning succeeds.

With reference to the first aspect, in some implementations of the first aspect, the receiving a second preset operation input by the user, and logging in to the target website in response to the second preset operation specifically includes:
obtaining a screen projection window corresponding to a target login interface of the verification device, where the target login interface includes confirmation information for login to the target website; and
receiving the second preset operation input by the user for the screen projection window, and logging in to the target website in response to the second preset operation.

With reference to the first aspect, in some implementations of the first aspect, the login device includes a login filling plug-in, the browser, a first SMS message service module, and a first connection service module, and the method further includes:
when the user logs in to the target website by using the browser of the login device, receiving, by the login filling plug-in, the first preset operation input by the user, where the first preset operation is used to choose to log in to the target website in the target manner;
querying, by the login filling plug-in, the login information corresponding to the target website from the first connection service module in response to the first preset operation;
querying, by the first connection service module, the login information from the verification device;
obtaining, by the first connection service module, the login information sent by the verification device, and sending the login information to the login filling plug-in;
sending, by the login filling plug-in, the login information to the browser, and providing the login information for the target website by using the browser; and
receiving, by the browser, the second preset operation input by the user, and logging in to the target website in response to the second preset operation.

With reference to the first aspect, in some implementations of the first aspect, the method further includes:
querying, by the login filling plug-in, a mobile number from the first connection service module in response to the first preset operation in which the user chooses to log in to the target website in the SMS message verification manner;
querying, by the first connection service module, the mobile number from the verification device;
obtaining, by the first connection service module, the mobile number sent by the verification device, and sending the mobile number to the login filling plug-in;
filling, by the login filling plug-in, an account filling position in the login interface of the browser with the mobile number;
triggering, by the browser, the login filling plug-in to query verification information corresponding to the target website;
querying, by the login filling plug-in, the verification information from the first SMS message service module;
querying, by the first SMS message service module, the verification information from the verification device by using the first connection service module;
obtaining, by the first connection service module, the verification information that corresponds to the target website and that is sent by a second connection service module of the verification device, and sending the verification information to the login filling plug-in by using the first SMS message service module; and
filling, by the login filling plug-in, a verification information filling position in the login interface of the browser with the verification information.

With reference to the first aspect, in some implementations of the first aspect, when there are a plurality of mobile numbers, the obtaining the mobile number sent by the verification device, and filling an account filling position in the login interface of the browser with the mobile number specifically includes:
obtaining, by the login filling plug-in, the plurality of mobile numbers sent by the verification device;
sending, by the login filling plug-in, the plurality of mobile numbers to the browser, and displaying the plurality of mobile numbers in the login interface of the browser;
receiving, by the login filling plug-in, a third preset operation input by the user; and
filling, by the login filling plug-in, the account filling position in the login interface of the browser with the target account in response to the third preset operation.

With reference to the first aspect, filling an account filling position in the login interface of the browser with the mobile number comprises: filling an account filling position in the login interface of the browser with the mobile number automatically; filling a verification information filling position in the login interface of the browser with the verification information comprises: filling a verification information filling position in the login interface of the browser with the verification information automatically.

With reference to the first aspect, part or all of the mobile number is displayed.

According to a second aspect, an account login system is provided. The system comprises a login device and a mobile phone, and a communication connection is established between the login device and the mobile phone; wherein the login device is configured to perform the method according to any one of the first aspect or the implementations in the first aspect.

According to a third aspect, an electronic device is provided. The electronic device includes: one or more processors; and one or more memories. The one or more memories store one or more computer programs, the one or more computer programs include instructions, and when the instructions are executed by the one or more processors, the electronic device is enabled to perform the method according to any one of the first aspect or the implementations in the first aspect.

According to a fourth aspect, a computer-readable storage medium is provided. The computer-readable storage medium stores computer-executable program instructions, and when the computer-executable program instructions are run on a computer, the computer is enabled to perform the method according to any one of the first aspect or the implementations in the first aspect.

According to a fifth aspect, a computer program product is provided. The computer program product includes computer program code, and when the computer program code is run on a computer, the computer is enabled to perform the method according to any one of the first aspect or the implementations in the first aspect.

### BRIEF DESCRIPTION OF DRAWINGS

FIG. 1 is a schematic diagram of logging in to an account of a web page version by using a browser according to an embodiment of this application;
FIG. 2 is a schematic diagram of a system architecture to which an account login method is applicable according to an embodiment of this application;
FIG. 3 is a schematic diagram of a structure of an electronic device 100 according to an embodiment of this application;
FIG. 4 is a block diagram of a software structure of an electronic device 100 according to an embodiment of this application;
FIG. 5A to FIG. 5I are schematic diagrams of GUIs involved in some account login processes according to an embodiment of this application;
FIG. 6A to FIG. 6C are schematic diagrams of GUIs that may be involved in some other account login method implementation processes according to an embodiment of this application;
FIG. 7 is a schematic flowchart of an account login method according to an embodiment of this application;
FIG. 8 is a schematic flowchart of another account login method according to an embodiment of this application;
FIG. 9A and FIG. 9B are schematic diagrams of GUIs that may be involved in still some other account login method implementation processes according to an embodiment of this application; and
FIG. 10 is a schematic flowchart of still another account login method according to an embodiment of this application.

### DESCRIPTION OF EMBODIMENTS

It should be noted that, terms used in implementations of embodiments of this application are only used to explain specific embodiments of this application, and are not intended to limit this application. In the descriptions of the embodiments of this application, unless otherwise stated, "/" means "or". For example, A/B may represent A or B. In this specification, "and/or" is merely an association relationship for describing associated obstacles and represents that three relationships may exist. For example, A and/or B may represent the following three cases: only A exists, both A and B exist, and only B exists. In addition, in the descriptions of the embodiments of this application, unless otherwise specified, "a plurality of" means two or more than two, and "at least one" and "one or more" mean one, two, or more than two.

In the following, the terms "first" and "second" are used merely for the purpose of description, and shall not be construed as indicating or implying relative importance or implicitly indicating a quantity of indicated technical features. Therefore, a feature defined by "first" or "second" may explicitly or implicitly include one or more such features.

As described in this specification, referring to "an embodiment", "some embodiments", or the like means that one or more embodiments of this application include particular features, structures, or characteristics described with reference to the embodiment. Therefore, statements such as "in an embodiment", "in some embodiments", "in some other embodiments", or "in other embodiments" that appear in different parts of this specification do not necessarily refer to same embodiments, but mean "one or more but not all embodiments", unless otherwise specifically emphasized. The terms "include", "comprise", and "have" and variants thereof all mean "include but are not limited to", unless otherwise specifically emphasized.

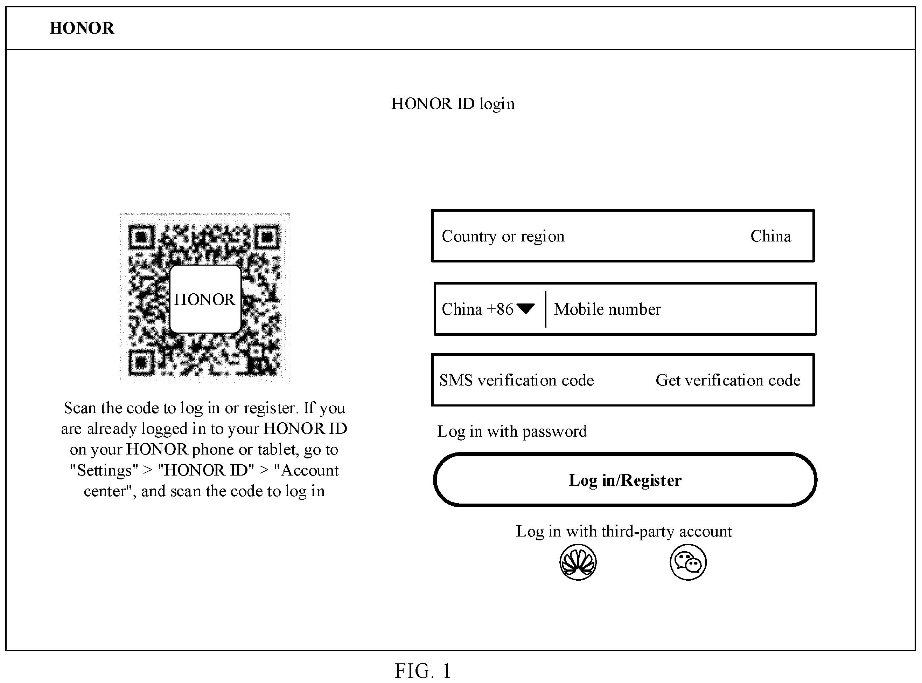

With reference to the description in the background, in daily application, when a user logs, by using a browser of a PC, in to a website that is of a web page version and that corresponds to an APP, the user often needs to take out a mobile phone to scan a QR code in a web page for assistant login, or the user often needs to fill the web page with a verification SMS message received by the mobile phone for assistant login. For example, HONOR Store of a web page version is logged in to by using a browser of a PC. As shown in FIG. 1, when a user logs in to HONOR Store of the web page version by using the browser of the PC, if the user logs in to HONOR Store of the web page version by filling a login account (a mobile number) and an SMS verification code, the following process is usually included: First, the user fills a login account filling box in a web page with the login account; then clicks on a "Get verification code" icon; and after a mobile phone receives a verification code corresponding to HONOR Store, the user takes out the mobile phone to view the verification code and fills a verification code filling box in the web page of the PC with the verification code, to finally implement account login of HONOR Store of the web page version.

Alternatively, as shown in FIG. 1, if the user chooses to log in to HONOR Store of the web page version in a QR code scanning manner, the user may perform code scanning login based on a web page prompt. For example, the user may take out the mobile phone, open a "Settings" application in the mobile phone, and enter HONOR ID-Account center in the "Settings" application; and then scan a QR code in the web page of the browser of the PC by using a QR code scanning function of Account center. After the scanning performed on the QR code succeeds and authentication performed on account information based on information about the QR code succeeds, account login of HONOR Store of the web page version can be implemented.

However, in login manners such as the login manners described above, a user needs to simultaneously operate two electronic devices, and consequently operation inconvenience is caused for the user and account login efficiency is relatively low. Especially when a mobile phone is not around the user, it is difficult for the user to smoothly log in to an account only by operating a login device alone. This causes a delay for the user in normally logging in to the account to perform a related operation, resulting in poor user experience.

In view of this, the embodiments of this application provide an account login method and an electronic device. Login information is automatically obtained and verified through cooperative interaction between an account login device (for example, a PC) and an assistant device (for example, a mobile phone), so that the login device automatically fills and verifies a login account or automatically scans a QR code in a web page of a browser without awareness of a user, thereby improving efficiency of logging in to an account of a web page version by using the browser and user experience.

The account login method provided in the embodiments of this application may be applied to a communication system that includes two electronic devices. To facilitate differentiation, the two electronic devices in the system are separately referred to as a login device and a verification device. A browser may be installed in the login device, and a user may log in to a website of a web page version (for example, Taobao of a web page version, WeChat of a web page version, or HONOR Store of a web page version) by using the browser of the login device. An application (application, App) corresponding to the website of the web page version (for example, Taobao of the web page version, WeChat of the web page version, or HONOR Store of the web page version) may be installed in the verification device. The verification device may be used to receive a verification message such as an SMS message, and may further perform assistant verification on login information in the login device in an SMS message manner, a QR code scanning manner, or the like. For example, the login device and the verification device each may be various types of electronic devices. For example, the login device may be an electronic device having a function of logging in to an account by using a browser, such as a PC, a tablet computer, a mobile phone, a smart terminal, an onboard device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), a display, or a television. The verification device may be an electronic device having a communication function, such as a mobile phone, a smart terminal, or a wearable device. The login device and the verification device may be electronic devices of a same type, for example, both mobile phones; or the login device and the verification device may be electronic devices of different types, for example, the login device is a PC, and the verification device is a mobile phone. Specific types of the login device and the verification device are not limited in the embodiments of this application.

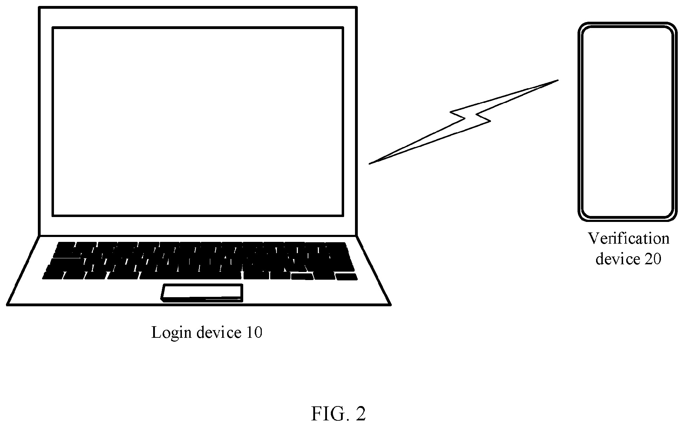

For example, FIG. 2 is a schematic diagram of a system architecture to which an account login method is applicable according to an embodiment of this application. The system architecture includes a login device 10 and a verification device 20. For ease of understanding, the following provides descriptions by using an example in which the login device is a PC and the verification device is a mobile phone.

In some embodiments, a wired or wireless communication connection may be established between the login device 10 and the verification device 20. The wired communication connection may include, for example, a universal serial bus (universal serial bus, USB) connection. The wireless communication connection may include, for example, a plurality of types such as a Bluetooth (bluetooth) connection, a wireless fidelity (wireless fidelity, Wi-Fi) connection, or a Wi-Fi peer to peer (peer to peer, P2P) connection. This is not limited in this embodiment of this application.

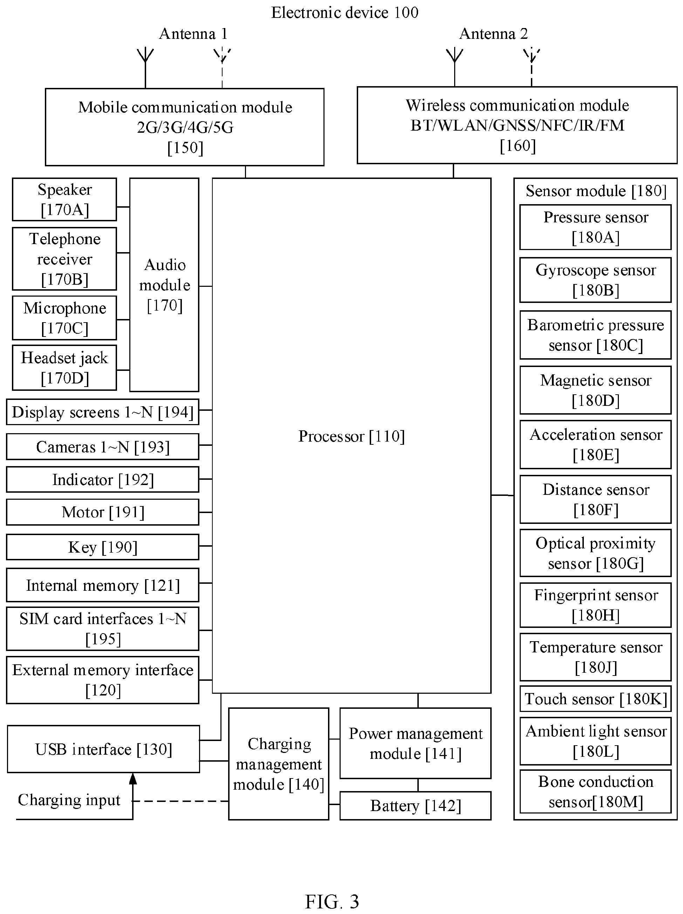

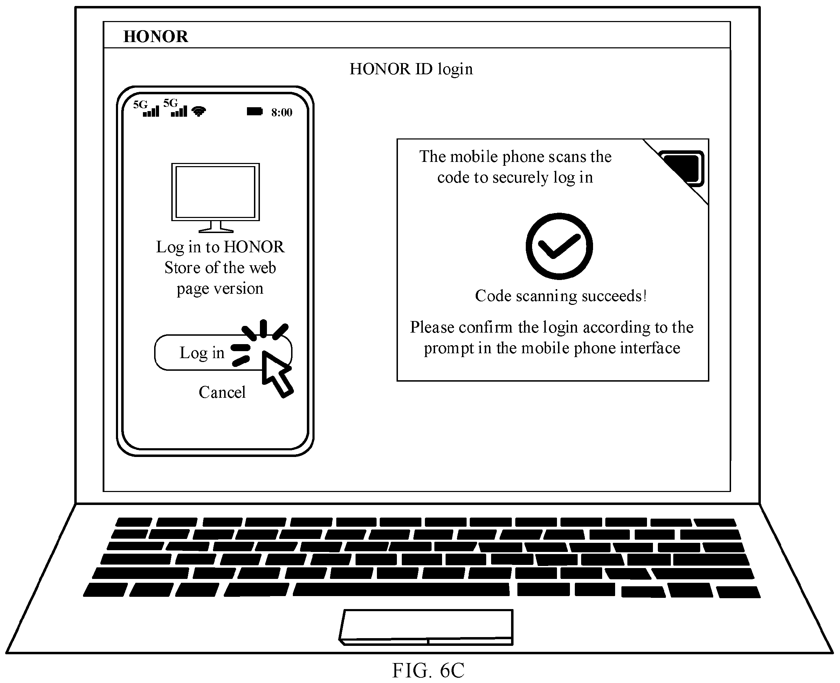

In some embodiments, after a communication connection is established between the login device 10 and the verification device 20, cooperative communication may be further established between the verification device 20 and the login device 10. The verification device 20 may project a currently displayed interface of the verification device 20 to the login device 10, and the login device 10 may display a corresponding screen projection window in real time. Content of the screen projection window may correspondingly change with the change of a screen projection interface in the verification device 20. In a cooperative communication scenario, a user may input an operation to the screen projection window displayed on the login device 10, to reversely control the verification device 20. For example, when the screen projection window displayed on the login device 10 is an account login confirmation interface (shown in FIG. 6C) of the verification device 20, the user may directly input a confirmation operation for the corresponding screen projection window (for example, click on an icon for confirming login in the screen projection window) in the login device 10, without picking up the verification device 20 to input a related operation. For example, FIG. 3 is a schematic diagram of a structure of an electronic device 100 according to an embodiment of this application. The electronic device 100 may correspond to the login device 10 or the verification device 20 in the network architecture shown in FIG. 2.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a key 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device 100. In some other embodiments of this application, the electronic device 100 may include more or fewer components than those shown in the figure, some components may be combined, some components may be split, or components may be arranged in different manners. Components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and command center of the electronic device 100. The controller may generate an operation control signal based on instruction operation code and a sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a camera flash, the camera 193, and the like by using different I2C bus interfaces. For example, the processor 110 may be coupled to the touch sensor 180K by using an I2C interface, so that the processor 110 communicates with the touch sensor 180K by using the I2C bus interface, to implement a touch function of the electronic device 100.

The I2S interface may be used for audio communication. In some embodiments, the processor 110 may include a plurality of groups of I2S buses. The processor 110 may be coupled to the audio module 170 by using the I2S bus, to implement communication between the processor 110 and the audio module 170. In some embodiments, the audio module 170 may transfer an audio signal to the wireless communication module 160 by using the I2S interface, to implement a function of answering a call by using a Bluetooth headset.

The PCM interface may also be used for audio communication, to sample, quantize, and code an analog signal. In some embodiments, the audio module 170 may be coupled to the wireless communication module 160 by using the PCM bus interface. In some embodiments, the audio module 170 may also transfer an audio signal to the wireless communication module 160 by using the PCM interface, to implement a function of answering a call by using a Bluetooth headset. Both the I2S interface and the PCM interface may be used for audio communication.

The UART interface is a universal serial data bus and is used for asynchronous communication. The bus may be a bidirectional communication bus. The bus converts to-be-transmitted data between serial communication and parallel communication. In some embodiments, the UART interface is usually configured to connect the processor 110 and the wireless communication module 160. For example, the processor 110 communicates with a Bluetooth module in the wireless communication module 160 by using the UART interface, to implement a Bluetooth function. In some embodiments, the audio module 170 may transfer an audio signal to the wireless communication module 160 by using the UART interface, to implement a function of playing music by using a Bluetooth headset.

The MIPI interface may be configured to connect the processor 110 and peripheral components such as the display screen 194 and the camera 193. The MIPI interface includes a camera serial interface (camera serial interface, CSI), a display serial interface (display serial interface, DSI), and the like. In some embodiments, the processor 110 communicates with the camera 193 by using the CSI interface, to implement a photographing function of the electronic device 100. The processor 110 communicates with the display screen 194 by using the DSI interface, to implement a display function of the electronic device 100.

The GPIO interface may be configured by using software. The GPIO interface may be configured as a control signal or may be configured as a data signal. In some embodiments, the GPIO interface may be configured to connect the processor 110 and the camera 193, the display screen 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to be connected to a charger to charge the electronic device 100, may be configured to transmit data between the electronic device 100 and a peripheral device, or may be configured to be connected to a headset, to play audio by using the headset. The interface may alternatively be configured to be connected to another terminal, for example, an AR device.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The charger may be a wireless charger or a wired charger. In some embodiments of wired charging, the charging management module 140 may receive charging input from a wired charger by using the USB interface 130. In some embodiments of wireless charging, the charging management module 140 may receive wireless charging input by using a wireless charging coil of the electronic device 100. The charging management module 140 may further supply power to the terminal by using the power management module 141 while charging the battery 142.

The power management module 141 is configured to be connected to the battery 142, the charging management module 140, and the processor 110. The power management module 141 receives input from the battery 142 and/or the charging management module 140, and supplies power to the processor 110, the internal memory 121, the external memory, the display screen 194, the camera 193, the wireless communication module 160, or the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert, by using the antenna 1, an amplified signal into an electromagnetic wave for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transfers, to the baseband processor for processing, the low-frequency baseband signal obtained through demodulation. The low-frequency baseband signal is processed by the baseband processor and then transferred to the application processor. The application processor outputs a sound signal by using an audio device (not limited to the speaker 170A or the telephone receiver 170B), or displays an image or a video by using the display screen 194. In some embodiments, the modem processor may be an independent component. In some other embodiments, the modem processor may be independent of the processor 110, and the modem processor and the mobile communication module 150 or another function module are disposed in a same component.

The wireless communication module 160 may provide a solution applied to the electronic device 100 for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more components integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert, by using the antenna 2, an amplified signal into an electromagnetic wave for radiation.

In some embodiments, the antenna 1 and the mobile communication module 150 in the electronic device 100 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 100 implements a display function by using the GPU, the display screen 194, the application processor, and the like. The display screen 194 is configured to display an image, a video, and the like.

The electronic device 100 may implement a photographing function by using the ISP, the camera 193, the video codec, the GPU, the display screen 194, the application processor, and the like.

The digital signal processor is configured to process a digital signal. In addition to processing a digital image signal, the digital signal processor can further process another digital signal. For example, when the electronic device 100 selects a frequency, the digital signal processor is configured to perform Fourier transform and the like on frequency energy. The video codec is configured to compress or decompress a digital video. The NPU is a neural-network (neural-network, NN) computing processor, quickly processes input information by referring to a biological neural network structure, for example, by referring to a transfer mode between human brain neurons, and may further continuously perform self-learning.

The external memory interface 120 may be configured to be connected to an external memory card such as a Micro SD card, to expand a storage capability of the electronic device 100. The external memory card communicates with the processor 110 by using the external memory interface 120, to implement a data storage function, for example, to store files such as music and a video in the external memory card. The internal memory 121 may be configured to store computer-executable program code, and the executable program code includes instructions.

The electronic device 100 may implement an audio function such as music playing or recording by using the audio module 170, the speaker 170A, the telephone receiver 170B, the microphone 170C, the headset jack 170D, and the application processor, and the like.

The pressure sensor 180A is configured to sense a pressure signal, and may convert the pressure signal into an electrical signal. The gyroscope sensor 180B may be configured to determine a moving attitude of the electronic device 100. The magnetic sensor 180D may include a Hall sensor. The electronic device 100 may detect opening or closing of a flip leather case by using the magnetic sensor 180D. The acceleration sensor 180E may detect magnitudes of acceleration in various directions (usually on three axes) of the electronic device 100, and may detect a magnitude and a direction of gravity when the electronic device 100 is still. The acceleration sensor 180E may be further configured to identify an attitude of the terminal, and is applied to applications such as switching between a landscape mode and a portrait mode and a pedometer. The optical proximity sensor 180G may include, for example, a light-emitting diode (LED) and an optical detector such as a photodiode. The light-emitting diode may be an infrared light-emitting diode. The electronic device 100 may emit infrared light by using the light-emitting diode. The ambient light sensor 180L is configured to sense ambient light brightness. The electronic device 100 may adaptively adjust brightness of the display screen 194 based on the sensed the ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display screen 194. The touch sensor 180K and the display screen 194 constitute a touchscreen, also referred to as a "touch control screen". The touch sensor 180K is configured to detect a touch operation acting on or near the touch sensor 180K. The bone conduction sensor 180M may obtain a vibration signal.

In addition, the electronic device 100 further includes the barometric pressure sensor 180C and the distance sensor 180F. The barometric pressure sensor 180C is configured to measure barometric pressure. In some embodiments, the electronic device 100 calculates an altitude by using a barometric pressure value measured by the barometric pressure sensor 180C, to assist in positioning and navigation.

The distance sensor 180F is configured to measure a distance. The electronic device 100 may measure a distance in an infrared or laser manner. In some embodiments, in a photographing scenario, the electronic device 100 may measure a distance by using the distance sensor 180F, to implement fast focusing.

For example, a software system of the electronic device 100 may use a layered architecture, an event-driven architecture, a microkernel architecture, a microservice architecture, or a cloud architecture. In the embodiments of the present invention, an Android system of a layered architecture is used as an example to describe a software structure of the electronic device 100.

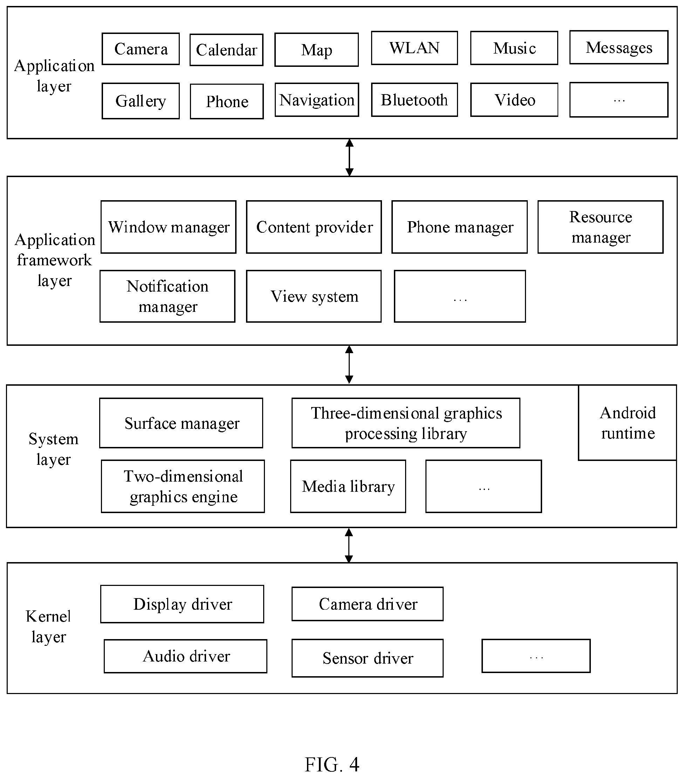

FIG. 4 is a block diagram of a software structure of an electronic device 100 according to an embodiment of this application.

In a layered architecture, software is divided into several layers, and each layer has a clear role and task. The layers communicate with each other by using software interfaces. In some embodiments, the Android system is divided into four layers: an application layer, an application framework layer, an Android runtime (Android runtime) and system library, and a kernel layer from top to bottom.

The application layer may include a series of application packages. As shown in FIG. 4, the application packages may include applications such as Camera, Gallery, Calendar, Phone, Map, Navigation, WLAN, Bluetooth, Music, Video, and Messages.

The application framework layer provides an application programming interface (application programming interface, API) and a programming framework for the applications at the application layer. The application framework layer includes some predefined functions. As shown in FIG. 4, the application framework layer may include a window manager, a content provider, a view system, a phone manager, a resource manager, a notification manager, and the like.

The window manager is configured to manage a window program. The window manager may obtain a size of a display screen, determine whether a status bar exists, lock a screen, capture a screenshot, and the like.

The content provider is configured to store and obtain data, and enable the data to be accessible to an application. The data may include a video, an image, audio, calls that are made and answered, a browsing history and bookmarks, an address book, and the like.

The view system includes visual controls such as a text display control and a picture display control. The view system may be configured to construct an application. A display interface may include one or more views. For example, a display interface including an SMS message notification icon may include a text display view and a picture display view.

The phone manager is configured to provide the electronic device 100 with a communication function, for example, call status management (including answering, hanging up, or the like). The resource manager provides various resources such as a localized string, an icon, a picture, a layout file, and a video file for the application.

The notification manager enables the application to display notification information in a status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in a top status bar of a system in a form of a graph or scroll bar text, for example, a notification of an application running in the background, or a notification that appears on a screen in a form of a dialog window. For example, prompt text information is presented in the status bar, an alert sound is given, the terminal vibrates, and an indicator light flashes.

Android Runtime includes a kernel library and a virtual machine. Android runtime is responsible for scheduling and management of an Android system.

The kernel library includes two parts: One part is a functional function that needs to be invoked in a java language, and the other part is a kernel library of Android.

The application layer and the application framework layer run on the virtual machine. The virtual machine executes java files of the application layer and the application framework layer as binary files. The virtual machine is configured to perform functions such as obstacle lifecycle management, stack management, thread management, security and exception management, and garbage collection.

The system library may include a plurality of functional modules, for example, a surface manager (surface manager), a media library (Media Libraries), a three-dimensional graphics processing library (for example, an OpenGL ES), and a 2D graphics engine (for example, an SGL).

The surface manager is configured to manage a display subsystem, and provide 2D and 3D layer fusion for a plurality of applications.

The media library supports playback and recording in a plurality of common audio and video formats, a still image file, and the like. The media library may support a plurality of audio and video coding formats such as MPEG4, H.264, MP3, AAC, AMR, JPG, and PNG.

The three-dimensional graphics processing library is configured to implement three-dimensional graphics drawing, image rendering and composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The account login method provided in the embodiments of this application may be applied to a scenario in which a verification device needs to assist in account information verification when a user logs in to an account of a web page version by using a browser of a login device, for example, a scenario in which a mobile phone needs to assist in verification code receiving or QR code scanning to assist in account information verification when a user logs in to WeChat of a web page version, Taobao of a web page version, or HONOR Store of a web page version. To better understand the account login method provided in the embodiments of this application, the following describes an account login process from a perspective of a user by using an example of logging in to a login account (or an HONOR ID or an HONOR Store account) of HONOR Store of a PC web page version.

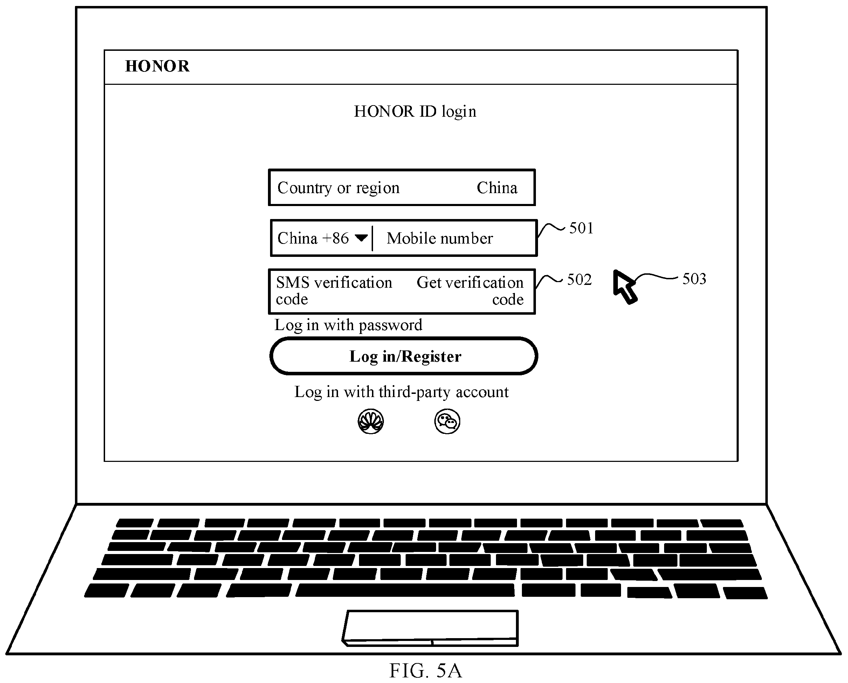

For example, FIG. 5A to FIG. 5I are schematic diagrams of graphical user interfaces (graphical user interface, GUI) involved in some account login processes according to an embodiment of this application.

In a possible scenario, when a user logs in to HONOR Store of a web page version by using a browser of a login device (where a PC is used as an example), the PC may display a login interface that is of the browser and that is shown in FIG. 5A. For example, the login interface may include a country or region input box, a mobile number input box 501, an SMS verification code input box 502, a password login connection indication, a "Log in/Register" icon, and a "Third-party account login" icon.

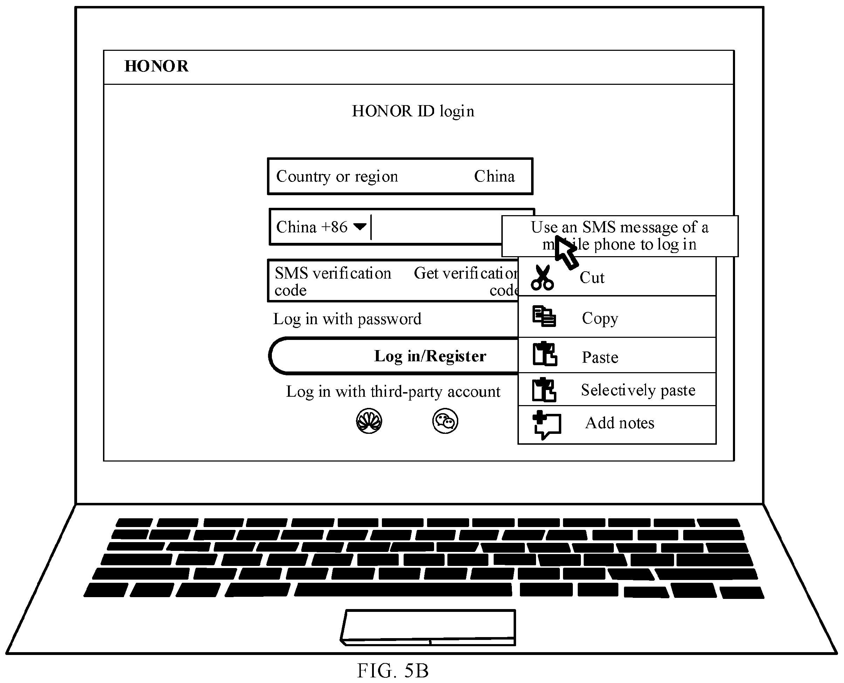

In some embodiments, when the user inputs a preset operation 503 (such as an operation of right-clicking a mouse) in the login interface of the PC, the PC may display, in response to the preset operation 503, a first-level drop-down list shown in FIG. 5B. For example, the first-level drop-down list includes a "Use an SMS message of a mobile phone to log in" prompt bar. Optionally, the first-level drop-down list may further include a "Cut" function bar, a "Copy" function bar, a "Paste" function bar, a "Selective paste" function bar, an "Add notes" function bar, and the like. The user may click on the "Use an SMS message of a mobile phone to log in" prompt bar in the first-level drop-down list by using the mouse or a shortcut key, to trigger the PC to automatically fill a login account (namely, a mobile number) of HONOR Store of the web page version.

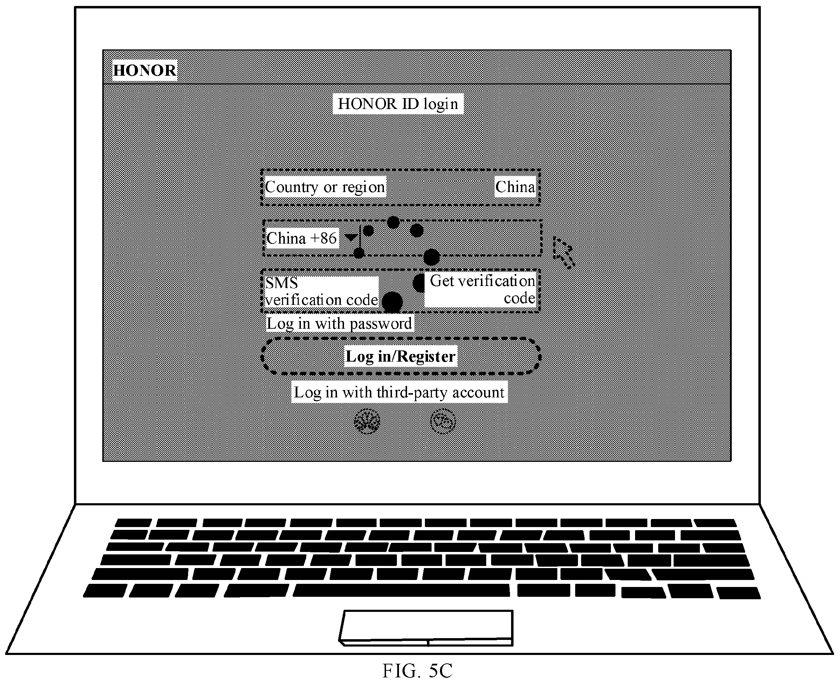

For example, in response to the operation in which the user clicks on "Use an SMS message of a mobile phone to log in", the PC is triggered to automatically log in to the account in the browser by using an SMS message of a mobile phone. For example, in a process of automatically logging in to the account, the login interface of the PC may be shown in FIG. 5C, that is, the login interface of the PC may display a loading mask.

It should be noted that the automatic account login in this embodiment of this application indicates that the PC automatically fills the login account and automatically obtains and fills a verification code. However, it does not indicate that the user does not need to perform any operation, but indicates that the user still needs to perform some operations in the PC (for example, an operation of clicking on a "Get verification code" icon or an operation of clicking on a "Log in/Register" icon described below). However, the user does not need to perform an operation in the mobile phone. In this case, even if the mobile phone is not around the user, but communication is established between the mobile phone and the PC, the user can successfully log in to a website of a web page version by operating the PC alone.

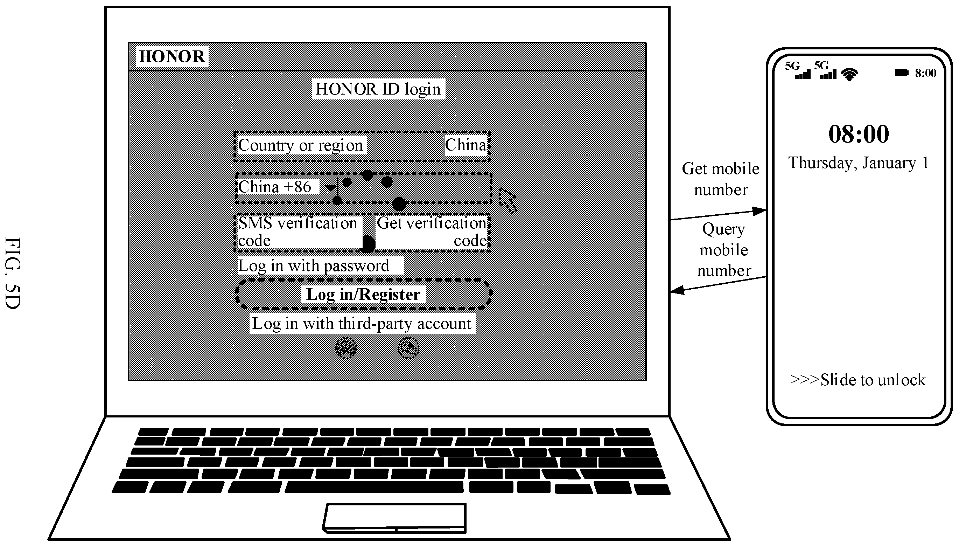

In some embodiments, as shown in FIG. 5D, in a process in which the PC automatically logs in to the account, an interaction process between the PC and the mobile phone may include: the PC queries the mobile number from the mobile phone in response to an automatic-login trigger operation (which may correspond to the foregoing clicking on "Use an SMS message of a mobile phone to log in"); and the mobile phone feeds back the mobile number of the mobile phone to the PC in response to the mobile number query operation of the PC.

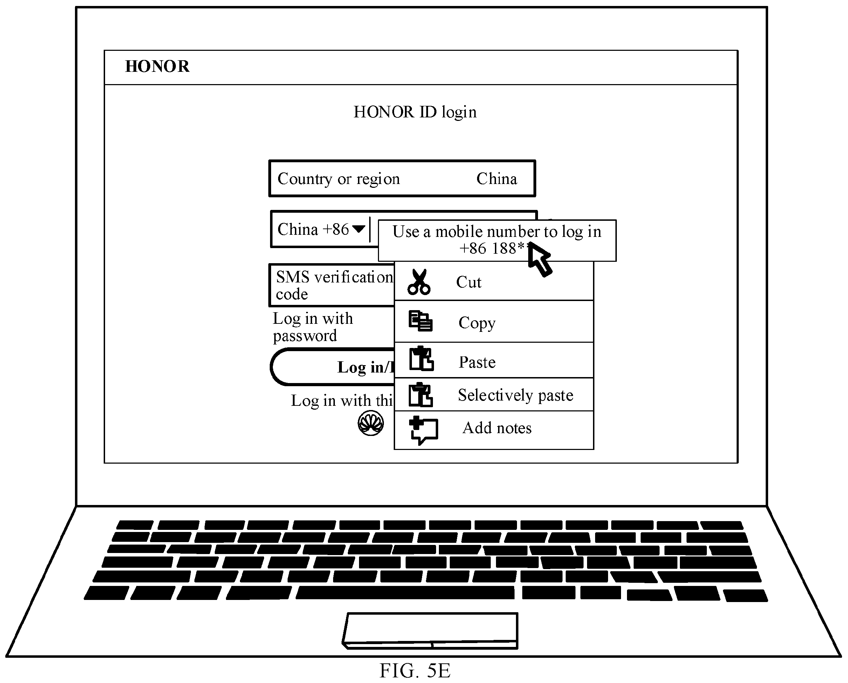

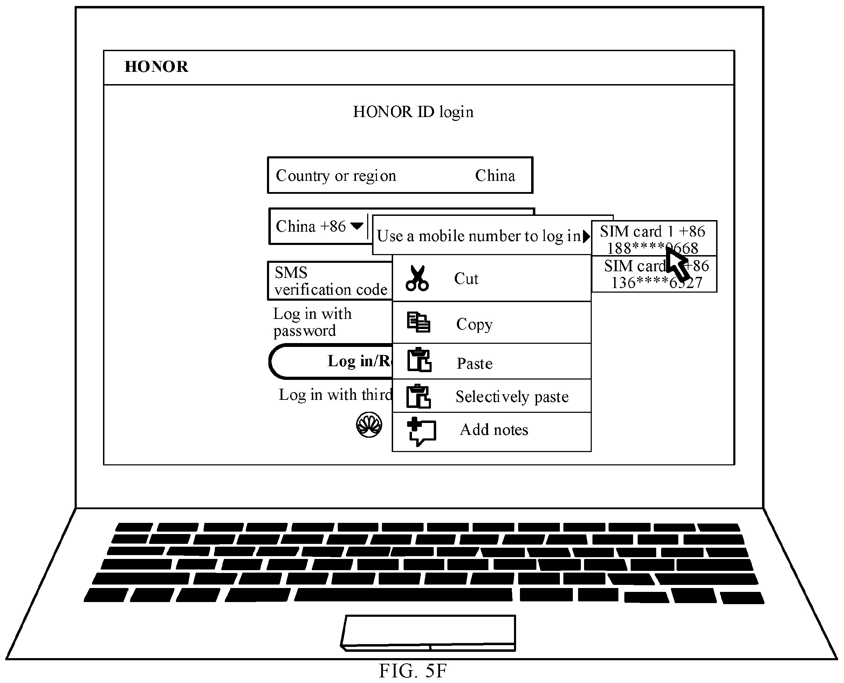

In some embodiments, as shown in FIG. 5E, after the PC receives the mobile number sent by the mobile phone, a first-level drop-down list displayed when the user right-clicks on the login interface may include a mobile number prompt bar (for example, "Use a mobile number to log in +86 188**" shown in FIG. 5E). In some other embodiments, when the user has at least two mobile numbers (for example, an SIM card 1 and an SIM card 2 are installed in the mobile phone), the mobile number prompt bar in the first-level drop-down list displayed when the user right-clicks on the login interface further includes a second-level drop-down list, and the second-level drop-down list displayed when the user clicks on a second-level drop-down list indicator in the mobile number prompt bar may include the SIM card 1 and a corresponding mobile number of the SIM card 1, and the SIM card 2 and a corresponding mobile number of the SIM card 2 (for example, "SIM card 1 +86 188****0668" and "SIM card 2 +86 136****6527" shown in FIG. 5F). The user may select a login account by clicking on a mobile number in the second-level drop-down list.

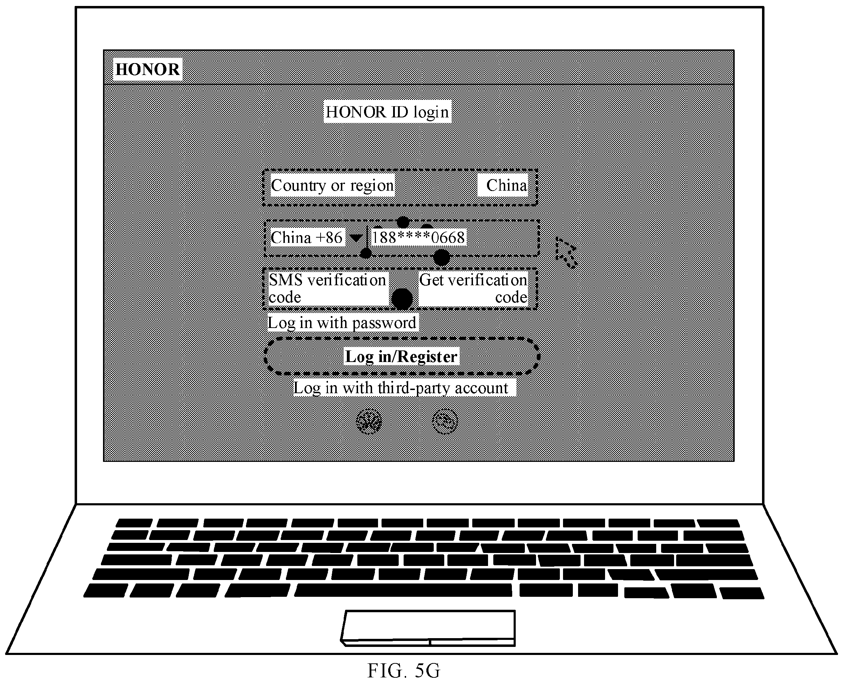

For example, as shown in FIG. 5G, in response to the clicking operation of the user for selecting the mobile number, the selected mobile number may be automatically filled in the mobile number input box 501, and the login interface of the PC may continue to display the loading mask.

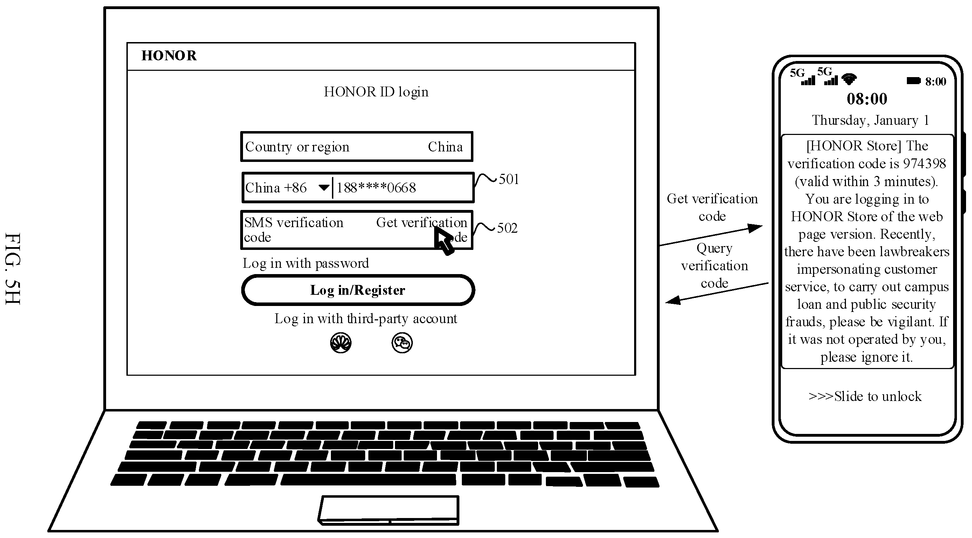

In some embodiments, after the PC automatically fills the login account, as shown in FIG. 5H, the PC may further interact with the mobile phone to obtain an SMS verification code corresponding to the mobile number. For example, an interaction process between the PC and the mobile phone may include: the PC queries the corresponding SMS verification code from the mobile phone in response to a trigger operation for automatically filling the mobile number; and the mobile phone feeds back the SMS verification code that is for logging in to HONOR Store and that corresponds to the mobile number to the PC in response to the query operation of the PC.

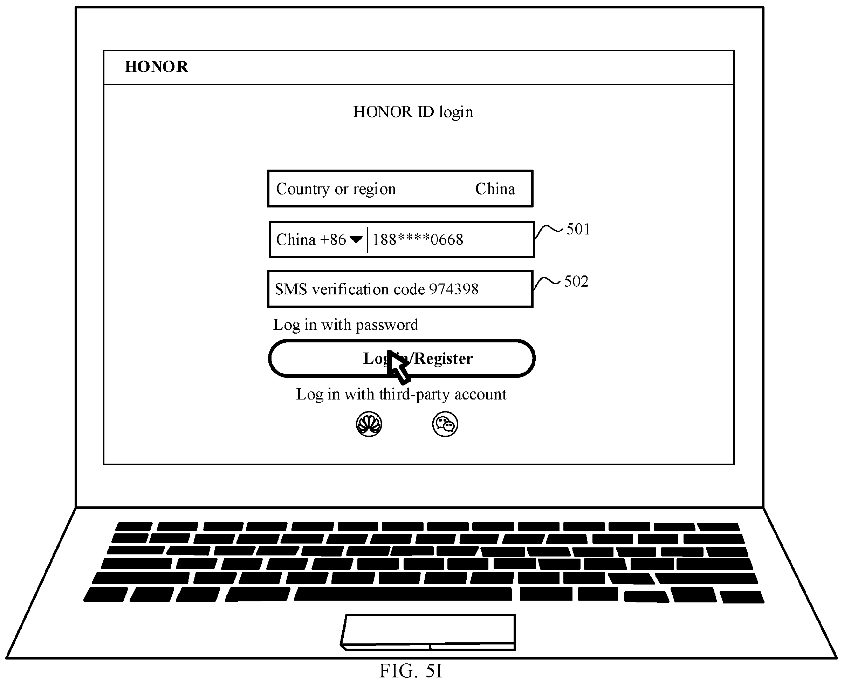

For example, as shown in FIG. 5I, after receiving the verification code that is for logging in to HONOR Store and that corresponds to the mobile number, the PC may automatically fill the verification code input box 502 in the login interface of the PC with the verification code. Then, the user may click on the "Log in/Register" icon in the login interface of the PC to complete a login process of HONOR Store of the web page version.

It should be noted that the PC interfaces shown in the foregoing embodiment of FIG. 5A to FIG. 5I and the manner of triggering the PC to obtain verification information are merely examples. In actual application, interface content involved in the account login method provided in this embodiment of this application may further include other more or less content, and the PC may be triggered, in another manner, to query the verification information from the mobile phone. This is not limited in this embodiment of this application.

According to the account login method provided in this embodiment of this application, when a user logs in to a website of a web page version by using a browser of a login device, the login device automatically obtains account information and verification information that correspond to the account from the verification device, without requiring the user to manually operate or view the verification device, so that the account information and the verification information can be automatically filled without awareness of the user, thereby improving convenience of logging in to the website of the web page version on the login device and improving user experience.

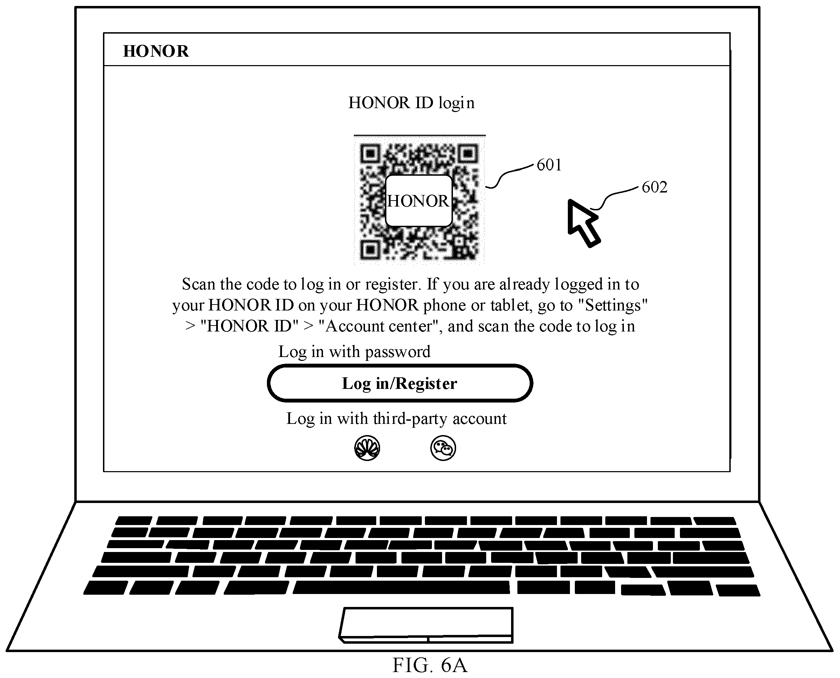

The following describes another account login process from a perspective of a user by still using an example of logging in to a login account of HONOR Store of a PC web page version. For example, FIG. 6A to FIG. 6C are schematic diagrams of GUIs that may be involved in some other account login method implementation processes according to an embodiment of this application. In another possible scenario, a user may alternatively log in to a website of a web page version in a browser of a login device in a QR code scanning manner. For example, a code scanning login interface of a PC may be shown in FIG. 6A. The account login interface includes a QR code 601 corresponding to a login account of HONOR Store, prompt information (for example, "Scan the code to log in or register. If you are already logged in to your HONOR ID on your HONOR phone or tablet, go to "Settings" > "HONOR ID" > "Account center", and scan the code to log in" shown in FIG. 6A) for scanning the QR code, a password login connection, a "Log in/Register" icon, a third-party account login connection, and the like.

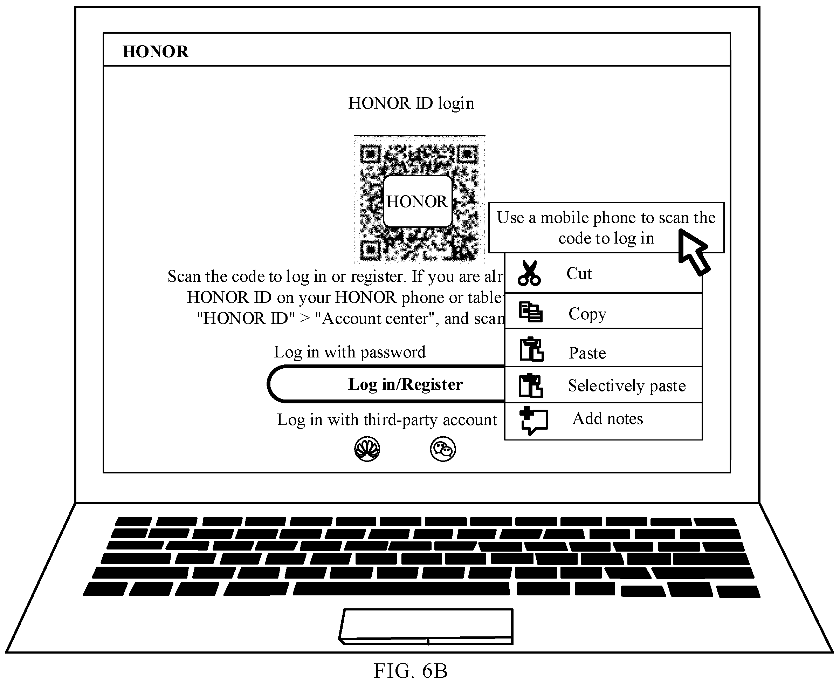

In some embodiments, when the user inputs a preset operation 602 (for example, an operation of right-clicking a mouse) in the login interface of the PC, the login interface of the PC may display a first-level drop-down list shown in FIG. 6B. The first-level drop-down list may include a "Scan the code to log in to the account" prompt bar (for example, a "Use a mobile phone to scan the code to log in" prompt bar shown in FIG. 6B). Then, the user may click on the "Scan the code to log in to the account" prompt bar by using the mouse or a shortcut key.

In some embodiments, in response to the operation in which the user clicks on the "Scan the code to log in to the account" prompt bar, the account login interface of the PC may display "Code scanning succeeds" prompt information, for example, "Code scanning succeeds" prompt information shown in FIG. 6C. Optionally, before the account login interface of the PC displays the "Code scanning succeeds" prompt information, the interface of the browser of the PC may display a waiting interface (for example, a masked loading interface shown in FIG. 5C or FIG. 5G) for specific duration. Within the specified duration, the PC may request a mobile phone to scan the QR code, and obtain a code scanning success result of the mobile phone. A specific code scanning interaction process is described below, and is temporarily not described herein in detail.

In some embodiments, when displaying the "Code scanning succeeds" prompt information, the account login interface of the PC may further display "Confirm the login in a mobile phone interface" prompt information, for example, "Please confirm the login according to the prompt in the mobile phone interface" shown in FIG. 6C. In some embodiments, in an automatic code scanning process of the PC, the PC may obtain an account login confirmation window projected by the mobile phone, and display the screen projection window of the mobile phone in a current interface of the PC. Then, the user may click on a "Log in" icon in the screen projection window that is of the mobile phone and that is displayed in the current interface of the PC, to complete a login process of HONOR Store of the web page version.

It should be noted that the PC interfaces shown in the foregoing embodiment of FIG. 6A to FIG. 6C and the manner of triggering the PC to obtain verification information are merely examples. In actual application, interface content involved in the account login method provided in this embodiment of this application may further include other more or less content, and the PC may be triggered, in another manner, to query the verification information from the mobile phone. This is not limited in this embodiment of this application.

According to the account login method provided in this embodiment of this application, when a user logs in to a website of a web page version on a login device, the login device automatically obtains verification information corresponding to an account from a verification device, without requiring the user to manually view the verification information on the verification device and input the verification information to the login device, thereby improving convenience of logging in to the website on the login device and improving user experience.

To better understand the account login method provided in the embodiments of this application, the following describes a specific implementation process of the account login method with reference to different login manners. First, a specific implementation process in which a login manner is logging in to a corresponding account by using a mobile number and a verification code is described.

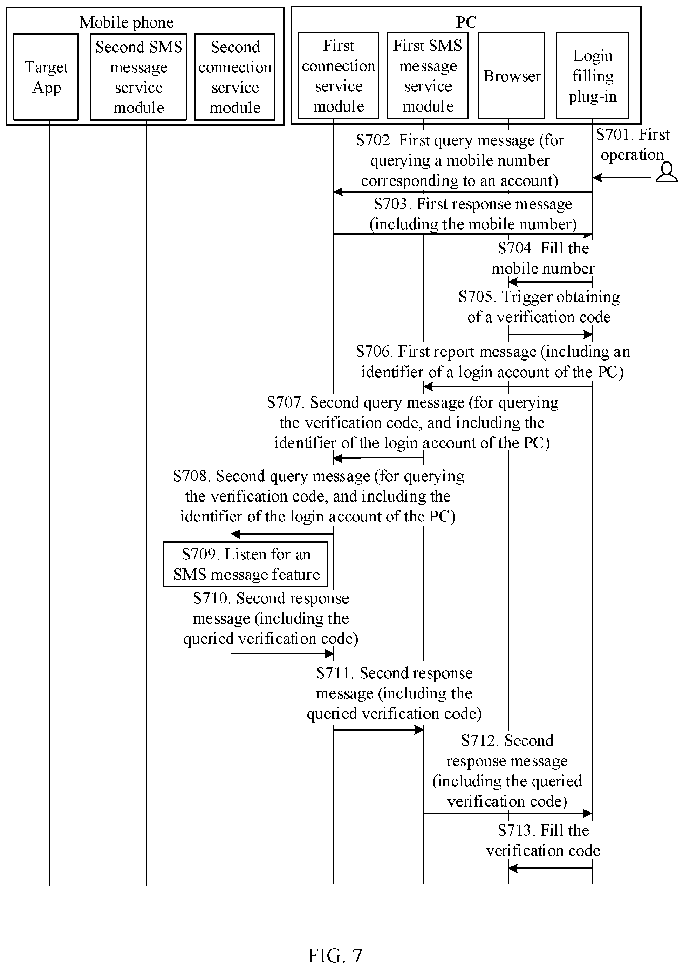

For example, FIG. 7 is a schematic flowchart of an account login method according to an embodiment of this application. The account login method may be applied to the system architecture shown in FIG. 2. For ease of understanding, herein descriptions are provided by still using an example in which the login device is a PC and the verification device is a mobile phone. The method may include the following steps.

S701. A login filling plug-in of a PC receives a first operation input by a user.

The login filling plug-in of the PC may be a plug-in installed in a browser through manual assistance of the user or a plug-in automatically installed in the browser by the PC after the browser used for account login is downloaded. The login filling plug-in is invoked to provide a trigger interface for the PC to perform automatic account filling and verification. For example, the login filling plug-in may be specifically implemented as a "Use an SMS message of a mobile phone to log in" prompt bar (for example, the "Use an SMS message of a mobile phone to log in" prompt bar shown in FIG. 5B or the "Use a mobile phone to scan the code to log in" prompt bar shown in FIG. 6B) in a login interface of the browser of the PC, or may be presented as a login button in a top Tab navigation bar in the login interface of the browser of the PC. This is not limited in this embodiment of this application.

In some embodiments, the first operation is used to trigger the PC to perform an automatic filling and verification procedure for the login account in the login interface of the browser. The automatic filling procedure includes that the PC queries and obtains a mobile number, a verification code, and the like from a mobile phone. For example, the first operation may be an operation in which the user clicks on a visible function button presented by the login plug-in in the interface of the browser of the PC. For example, after the login plug-in is installed, when the top Tab navigation bar in the login interface of the browser of the PC displays the login button, the first operation may be an operation of clicking on the login button. For another example, after the login plug-in is installed, when a first-level drop-down list displayed when the user right-clicks a mouse in the login interface of the PC may include a "Use an SMS message of a mobile phone to log in" prompt bar (shown in FIG. 5E or FIG. 5F), the first operation may be clicking on the "Use an SMS message of a mobile phone to log in" prompt bar in the drop-down list.

When the first operation is clicking on the "Use an SMS message of a mobile phone to log in" prompt bar in the first-level drop-down list, before performing the operation, the user may further input a preset operation (for example, the preset operation 503 shown in FIG. 5A) to the interface of the browser of the PC. The preset operation is used to indicate the browser of the PC to display the first-level drop-down list including the "Use an SMS message of a mobile phone to log in" prompt bar.

S702. The login filling plug-in of the PC sends a first query message to a first connection service module of the PC.

The first query message is used to query a mobile number from the first connection service module of the PC, and the mobile number is used as a login account of a web page version of the browser of the PC.

It should be noted that the first connection service module may communicate with a second connection service module on a mobile phone side to obtain a plurality of types of information (including the mobile number) on the mobile phone side. For example, there may be a plurality of manners of triggering the first connection service module to obtain the mobile number. For example, after a communication connection is established between the mobile phone and the PC, the PC may be triggered to query the mobile number corresponding to the mobile phone from the mobile phone and store the queried mobile number in the PC. For another example, after the user clicks on the login filling plug-in in the login interface of the PC, and the login filling plug-in sends the first query message to the first connection service module, the first connection service module may be triggered to query the mobile number of the mobile phone from the mobile phone side in real time. Time and a manner of triggering the PC to query the mobile number from the mobile phone are not specifically limited in this embodiment of this application.

S703. The first connection service module of the PC sends a first response message to the login filling plug-in.

The first response message includes the mobile number used as the login account of the web page version of the browser of the PC.

In some embodiments, the mobile phone may correspond to at least one mobile number. For example, when only one subscriber identity module (subscriber identity module, SIM) card (or embedded SIM (embedded-SIM, eSIM) card) is installed in the mobile phone, the mobile phone corresponds to one mobile number. When two SIM cards (or eSIM cards) are installed in the mobile phone, the mobile phone may correspond to two mobile numbers. The first connection service module may send the at least one mobile number corresponding to the mobile phone to the login filling plug-in.

S704. The login filling plug-in of the PC fills the browser with the mobile number.

In some embodiments, after obtaining the at least one mobile number corresponding to the mobile phone, the login filling plug-in of the PC may fill an account input box in the login interface of the browser of the PC with the mobile number corresponding to the login account. For example, the login filling plug-in may fill the account input box in the login interface of the browser of the PC with the mobile number in a plurality of manners. For example, when there is only one mobile number, after obtaining the mobile number, the login filling plug-in may automatically fill the account input box in the login interface of the browser with the mobile number. For another example, when there are two or more mobile numbers, after the login filling plug-in obtains the mobile numbers, when the user clicks on a login button corresponding to the login filling plug-in or clicks on the login interface, the PC displays the plurality of mobile numbers (for example, in a form of a second-level drop-down list) for the user to select, and automatically fills the account input box in the login interface with a mobile number selected by the user.

S705. The browser of the PC triggers the login filling plug-in of the PC to obtain a verification code.

In some embodiments, after the mobile number is automatically filled in the account input box in the login interface of the browser of the PC, the browser of the PC may trigger the login filling plug-in to obtain an SMS verification code on the mobile phone side.

In some embodiments, a manner in which the browser of the PC triggers the login filling plug-in to obtain the SMS verification code on the mobile phone side may include: the browser of the PC sends a trigger message to the login filling plug-in, where the trigger message may be used to indicate that the login account has been filled; and the login filling plug-in may query the SMS verification code corresponding to the login account from the mobile phone in response to the trigger message.

For example, a process in which the login filling plug-in queries and obtains the SMS verification code corresponding to the login account from the mobile phone may include the following step S706 to step S712.

S706. The login filling plug-in of the PC sends a first report message to a first SMS message service module of the PC.

The first report message may include an identifier of the login account of the PC, and the identifier of the login account is used to identify a login website (for example, Taobao, HONOR Store, or WeChat) that is currently logged in to. For example, the identifier of the login account is a name (such as Taobao, HONOR Store, or WeChat) corresponding to the login account, or a uniform resource locator (uniform resource locator, URL) corresponding to the login account.

S707. The first SMS message service module of the PC sends a second query message to the first connection service module of the PC.

The second query message is used to query the verification code corresponding to the mobile number, and includes the identifier of the current web page login account of the browser of the PC. S708. The first connection service module of the PC sends the second query message to the second connection service module of the mobile phone.

In some embodiments, the first connection service module and the second connection service module may exchange information through wireless communication. For example, the first connection service module may send the second query message to the second connection service on the mobile phone side in a Bluetooth communication manner, a Wi-Fi communication manner, a Wi-Fi P2P communication manner, or the like. However, a communication manner between the PC and the mobile phone is not specifically limited in this embodiment of this application.

It should be noted that the first connection service module and the second connection service module in this embodiment of this application may correspond to the mobile communication module and/or the wireless communication module shown in FIG. 3, and may be specifically configured to implement communication connection and information exchange between the PC and the mobile phone.

S709. The second connection service module of the mobile phone listens for an SMS message feature in response to the second query message.

In some embodiments, after receiving the second query message sent by the first connection service module of the PC, the second connection service module of the mobile phone may obtain the identifier of the login account of the browser of the PC based on the second query message, and determine, based on the identifier of the login account, a login website (for example, Taobao, HONOR Store, or WeChat) that is to be logged in to; and then, the second connection service module may listen, based on the login website currently logged in to by the browser of the PC, for a verification SMS message corresponding to the login website.

It should be noted that different login websites correspond to different SMS message features, and therefore correspondences between different login websites and different SMS message features may be preset. For example, the SMS message feature herein may include an SMS message template, SMS message content, and a key field (for example, a name of a login platform or a URL of the login platform) included in an SMS message. For example, the login website currently logged in to by the browser of the PC is HONOR Store. In this case, after obtaining the login website, the second connection service module may listen for an SMS message that includes a uniform resource locator (uniform resource locator, URL) connection address (for example, hiHonor.com) of HONOR Store of a web page version, may listen for an SMS message that includes a "HONOR Store" field, or may listen for an SMS message whose SMS message template matches a preset correspondence with the HONOR Store login website.

In actual application, the verification SMS message that matches the login website may be listened for based on another type of correspondence. This is not limited in this embodiment of this application.

In some embodiments, the second connection service module may listen for the verification SMS message corresponding to the login website of the browser of the PC within preset duration. When obtaining, through listening within the preset duration, no verification SMS message corresponding to the login website, the second connection service module may query, from a database of the mobile phone, whether the verification SMS message corresponding to the login website has been stored. For example, the second connection service may query the corresponding verification SMS message from the database based on an SMS message feature corresponding to the login website.

In some embodiments, when obtaining, through listening, the verification SMS message corresponding to the login website, or when obtaining, through querying, the verification SMS message corresponding to the login website from the database, the second connection service module may obtain, based on the SMS message, verification information (for example, a verification code) corresponding to the login website.

It should be noted that this embodiment of this application only uses the verification SMS message as an example for description, and is not limited thereto. For example, in some scenarios, if a verification message corresponding to a login website is sent to a verification device in another manner (for example, a WeChat manner or an Email manner), corresponding verification information may still be obtained in the manner provided in this embodiment of this application. S710. The second connection service module of the mobile phone sends a second response message to the first connection service module of the PC.

The second response message includes the verification code queried by the PC.

S711. The first connection service module of the PC sends the second response message to the first SMS message service module of the PC.

S712. The first SMS message service module of the PC sends the second response message to the login filling plug-in of the PC.

S713. The login filling plug-in of the PC fills the browser of the PC with the verification code.

In some embodiments, after obtaining the second response message, the login filling plug-in of the PC may obtain, based on the second response message, the verification code that corresponds to the login account and that is received on the mobile phone side. Then, the login filling plug-in of the PC may fill the browser of the PC with the verification code.

For example, a process in which the login filling plug-in of the PC fills the browser of the PC with the verification code may include: after obtaining the verification code, the login filling plug-in sends the verification code to the browser; and after receiving the verification code, the browser fills a corresponding verification information filling box with the verification code.

Optionally, after obtaining the verification code, the login filling plug-in of the PC may further check the verification code, for example, check whether the verification code matches the login website; and when determining that the verification code matches the login website, that is, the verification code is a verification code of the current login website, fill a corresponding position in the browser with the verification code.

According to the account login method provided in this embodiment of this application, when a user logs in to an account on a login device, the login device automatically obtains verification information corresponding to the account from a verification device, without requiring the user to manually view the verification information on the verification device and input the verification information to the login device, thereby improving convenience of logging in to the account on the login device and improving user experience.

The following specifically describes a corresponding account login process during login to a browser of a PC in a code scanning manner.

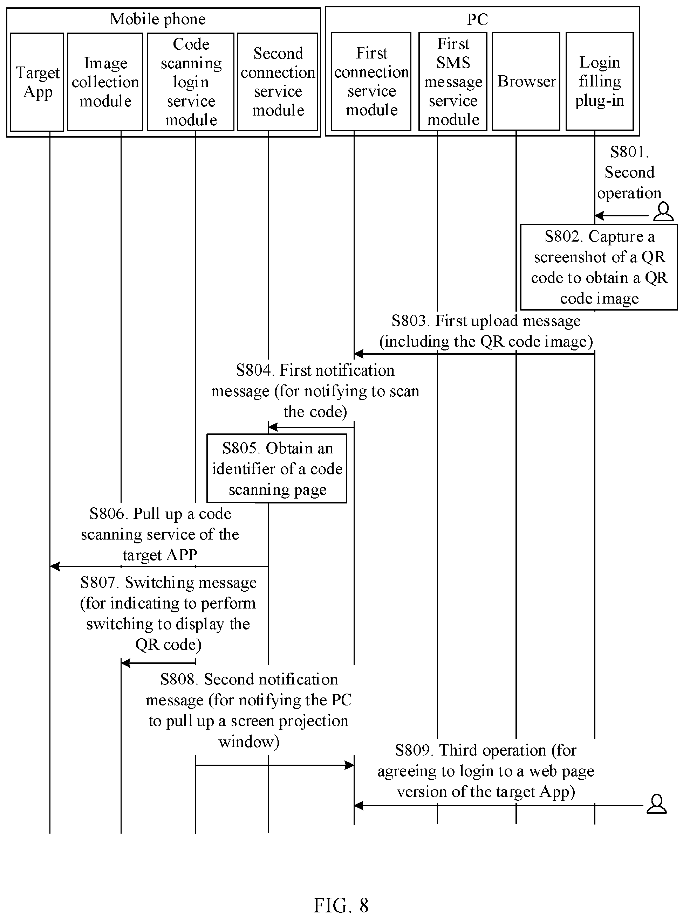

For example, FIG. 8 is a schematic flowchart of another account login method according to an embodiment of this application. The account login method may be applied to the system architecture shown in FIG. 2. For ease of understanding, herein descriptions are provided by still using an example in which the login device is a PC and the verification device is a mobile phone.

The method may include the following steps.

S801. A login filling plug-in of a PC receives a second operation input by a user.

The second operation may be, for example, an operation in which the user clicks on a QR code in a login interface of a browser of the PC, and may correspond to, for example, an operation of clicking on "Use a mobile phone to scan the code to log in" shown in FIG. 6B, or another operation of clicking on a QR code login icon in the login interface. The second operation is used to trigger the PC to perform a procedure of automatically scanning a QR code to obtain login information. S802. In response to the second operation, the login filling plug-in of the PC captures a screenshot of the QR code to obtain a QR code image.

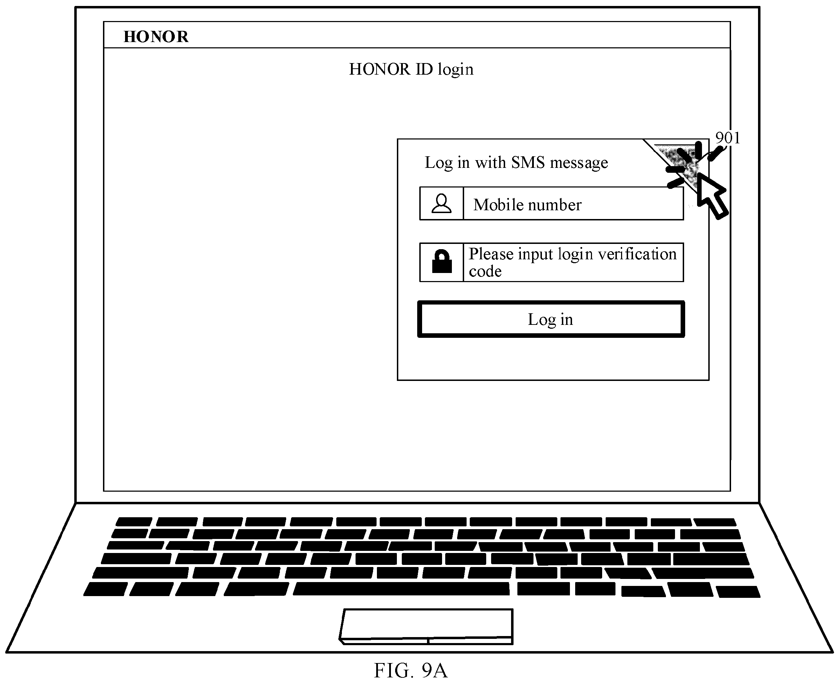

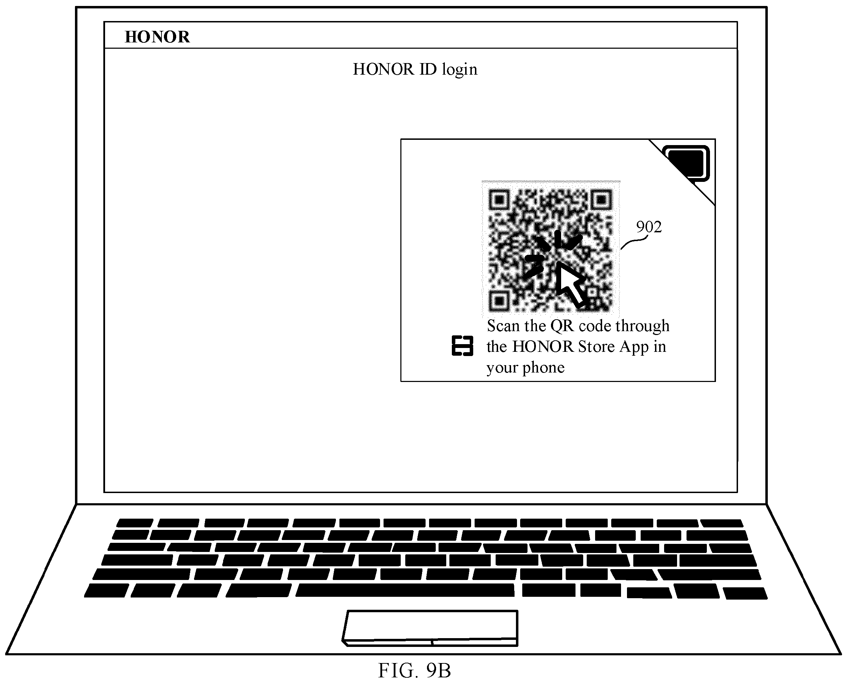

In some embodiments, before the second operation of the user is received, the login interface of the browser of the PC may display a complete QR code image (shown in FIG. 6A or FIG. 6B), or may display an incomplete QR code image (for example, a QR code image 901 shown in FIG. 9A). When the login interface of the browser of the PC displays an incomplete QR code image (for example, the QR code 901 shown in FIG. 9A), the second operation may be a clicking operation performed on the incomplete QR code image, for example, clicking the QR code 901 shown in FIG. 9A. The login interface of the browser of the PC may display a complete QR code image (for example, a QR code image 902 shown in FIG. 9B) in response to the second operation. S803. The login filling plug-in of the PC sends a first upload message to a first connection service module of the PC.

The first upload message includes the QR code image.

S804. The first connection service module of the PC sends a first notification message to a second connection service module of a mobile phone.

The first notification message is used to notify the mobile phone to scan the code. The first notification message may further include an identifier of a login website of the browser of the PC, and the identifier of the login account is used to identify a login website (for example, Taobao, HONOR Store, or WeChat) that is currently logged in to. For example, the identifier of the login account is a name (such as Taobao, HONOR Store, or WeChat) corresponding to the login account, or a uniform resource locator (uniform resource locator, URL) corresponding to the login account. In some embodiments, the first notification message may further include the QR code image. Specifically, before sending the QR code image to the second connection service module, the first connection service module may first convert a format of the QR code image, for example, convert the QR code image from a picture format to a video stream format (for example, an MP4 format); and then, send a QR code image in the video stream format to the second connection service module of the mobile phone.

S805. The second connection service module of the mobile phone obtains an identifier of a code scanning page.

In some embodiments, after receiving the second notification message, the second connection service module may obtain the identifier of the code scanning page based on the identifier of the login website in the second notification message.

It should be noted that the identifier of the code scanning page herein may be a code scanning page in a target APP that is in the mobile phone and that corresponds to the current login website of the browser of the PC.

In some embodiments, the second connection service module may determine the corresponding target APP in the mobile phone based on the identifier of the login website, and an identifier of the target APP may be used as the identifier of the code scanning page. For example, if the current login website of the browser of the PC is HONOR Store, and the identifier that is of the login website and that is carried in the second notification message is hiHonro.com, the second connection service module may determine, based on the identifier, that the corresponding target APP is an HONOR Store APP in the mobile phone, and a page used to scan the QR code is a code scanning page in the HONOR Store APP in the mobile phone. For another example, if the current login website of the browser of the PC is Taobao, and the identifier that is of the login website and that is carried in the second notification message is a "Taobao" field, the second connection service module may determine, based on the identifier, that the corresponding target APP is a Taobao APP in the mobile phone, and a page used to scan the QR code is a code scanning page in the Taobao APP in the mobile phone.

S806. The second connection service module of the mobile phone pulls up a code scanning service of the target APP.

In some embodiments, after determining the target APP that is in the mobile phone and that corresponds to the current login website of the browser of the PC, the second connection service module may indicate the target APP to perform a QR code scanning procedure. For example, the QR code scanning procedure includes: the target APP indicates an image collection module (for example, a camera of the mobile phone) to enable image scanning to collect QR code information; and in response to the indication of the target APP, the image collection module may perform an image scanning operation, and send a collected data stream to the target APP. A format of the data stream transmitted by the image collection module to the target APP may be a video stream format (for example, an MP4 format).

S807. A code scanning login service module of the mobile phone sends a switching message to the image collection module of the mobile phone.

The switching message is used to indicate the image collection module to switch the data stream transmitted to the target APP to a data stream including the QR code image.

In some embodiments, the code scanning login service module may send the data stream including the QR code image to the image collection module; and the image collection module sends the obtained data stream including the QR code image to the target APP in response to the switching message. That is, in this case, the image collection module still performs an image scanning operation, but a data stream sent by the image collection module to the target APP is not a data stream of an image collected in real time, but is replaced with the data stream including the QR code image.

In some embodiments, after obtaining the data stream including the QR code image, the target APP authenticates the QR code information. For a process in which the target APP authenticates the QR code information, refer to an existing procedure. Details are not described herein.

S808. The code scanning login service module of the mobile phone sends a second notification message to the first connection service module of the PC.

After the authentication performed by the target APP on the QR code information succeeds, the mobile phone may feed back a code scanning success message to the PC. The code scanning success message may be carried in, for example, the second notification message. After obtaining the code scanning success message, the login filling plug-in of the PC may indicate the browser to display "Code scanning succeeds" prompt information (shown in FIG. 6C).

In addition, the second notification message is further used to notify the PC to pull up a screen projection window of the mobile phone. Specifically, the second connection service module may send the second notification message to the login filling plug-in of the PC, and the login filling plug-in may indicate, based on the second notification message, the browser of the PC to display the current screen projection window of the mobile phone. The current screen projection window of the mobile phone may be, for example, an interface (for example, the screen projection window that is of the mobile phone and that is shown in FIG. 6C) for confirming login to a target APP of a web page version. For example, a manner in which the PC obtains the current screen projection window of the mobile phone may include: (1) after obtaining the second notification message, the PC requests, in real time, the mobile phone to perform screen projection; and (2) the PC establishes cooperative communication with the mobile phone, and after obtaining the second notification message, the PC may directly indicate the browser to display the screen projection window of the mobile phone.

In some embodiments, if no cooperative communication is established between the mobile phone and the PC before the login filling plug-in indicates the browser to display the current screen projection window of the mobile phone, the second notification message may first trigger the PC to establish cooperative communication with the mobile phone. Alternatively, if no cooperative communication is established between the mobile phone and the PC before the login filling plug-in indicates the browser to display the current screen projection window of the mobile phone, the mobile phone may actively establish cooperative communication with the PC after successfully scanning the code. For a process of establishing cooperative communication between the PC and the mobile phone, refer to an existing procedure. Details are not described herein.

S809. The first connection service module of the PC receives a third operation input by the user. The third operation is used to agree to login to the web page version of the target App. The third operation may correspond to, for example, a clicking operation on the "Log in" icon in the screen projection window that is of the mobile phone and that is shown in FIG. 6C.

According to the account login method provided in this embodiment of this application, when a user logs in to an account on a login device, the login device automatically obtains verification information corresponding to the account from a verification device, without requiring the user to manually view the verification information on the verification device and input the verification information to the login device, thereby improving convenience of logging in to the account on the login device and improving user experience.

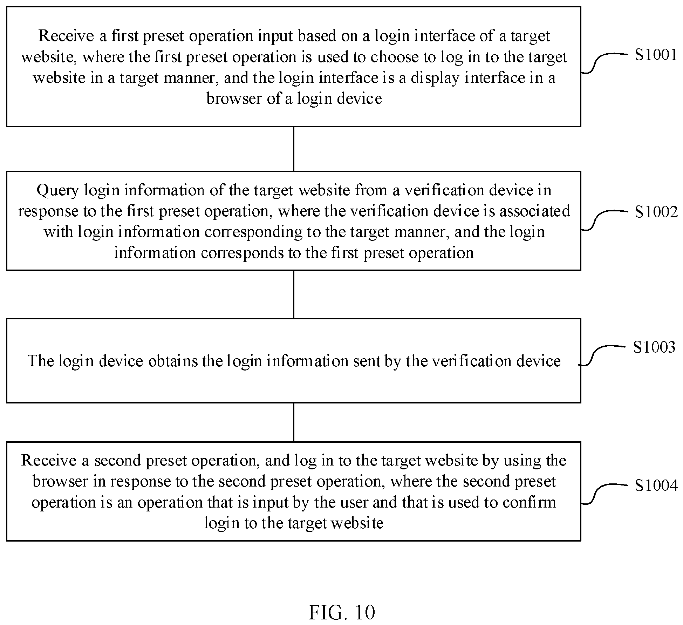

For example, FIG. 10 is a schematic flowchart of still another account login method according to an embodiment of this application. The procedure may include the following steps.

S1001. Receive a first preset operation input based on a login interface of a target website, where the first preset operation is used to choose to log in to the target website in a target manner, and the login interface is a display interface in a browser of a login device.

In some embodiments, when a user logs in to the target website by using the browser of the login device, the login device receives the first preset operation input by the user. The first preset operation is an operation that is input by the user and that is used to choose to log in to the target website in the target manner.

The target website herein may be a website that is logged in to by using the browser and that needs to be logged in to with assistance of a verification device. The login interface may correspond to the interface shown in FIG. 5A or FIG. 6A. Specifically, the target website may correspond to the login website (for example, HONOR Store of a web page version, Taobao of a web page version, or WeChat of a web page version) logged in to by using the browser of the login device in the foregoing embodiment.

For example, the first preset operation herein may correspond to the first operation or the second operation described in the foregoing embodiment, that is, may correspond to the clicking operation on "Use an SMS message of a mobile phone to log in" shown in FIG. 5B, or may correspond to the clicking operation on "Use a mobile phone to scan the code to log in" shown in FIG. 6B.

In some embodiments, the logging in to the target network in a target manner may include: logging in to the target website in an SMS message verification manner, or logging in to the target website in a QR code scanning manner. The logging in to the target website in an SMS message verification manner may correspond to, for example, the login manner shown in the embodiment of FIG. 5A to FIG. 5I, and the logging in to the target website in a QR code scanning manner may correspond to, for example, the login manner shown in the embodiment of FIG. 6A and FIG. 6B.

S1002. Query login information of the target website from the verification device in response to the first preset operation, where the verification device is associated with login information corresponding to the target manner, and the login information corresponds to the first preset operation.

That the verification device is associated with login information corresponding to the target manner may indicate that when the target website is logged in to in the target manner, for example, the verification device can provide some assistant login information, such as a login account, verification information, or password information, corresponding to the target manner, or assist in QR code scanning.

In some embodiments, when the target manner is logging in to the target website in the SMS message verification manner, a process in which the login device queries the login information corresponding to the target website from the verification device may include: querying a mobile number from the verification device in response to the first preset operation in which the user chooses to log in to the target website in the SMS message verification manner, where the mobile number is a login account of the target website. With reference to functional modules of the login device, more specifically, the process may include: when the user logs in to the target website by using the browser of the login device, a login filling plug-in receives the first preset operation input by the user, where the first preset operation is used to choose to log in to the target website in the target manner; the login filling plug-in queries the login information corresponding to the target website from a first connection service module in response to the first preset operation; and then the first connection service queries the login information from the verification device.

In some other embodiments, when the target manner is logging in to the target website in the QR code scanning manner, a process in which the login device queries the login information corresponding to the target website from the verification device may include: obtaining a corresponding QR code image in response to the first preset operation in which the user chooses to log in to the target website in the QR code scanning manner; sending a code scanning notification message to the verification device, where the code scanning notification message includes the QR code image and an identifier corresponding to the target website; and then obtaining a scanning result of the verification device for the QR code image, and providing the login information for the target website by using the browser based on the scanning result.

For a process of querying the login information when the target website is logged in to in different manners, specifically refer to the specific description in the embodiment of FIG. 7 or FIG. 8. Details are not described herein again.

S1003. The login device obtains the login information sent by the verification device.

In some embodiments, after obtaining the login information, the login device may provide the login information for the target website by using the browser.

In some embodiments, when the target manner is logging in to the target website in the SMS message verification manner, a process in which the login device obtains the login information sent by the verification device and provides the login information for the target website by using the browser may include: obtaining the mobile number sent by the verification device, and filling an account filling position in the login interface of the browser with the mobile number; querying verification information corresponding to the target website from the verification device; and obtaining the verification information corresponding to the target website, and filling a verification information filling position in the login interface of the browser with the verification information. In some embodiments, when there are a plurality of mobile numbers, the obtaining the mobile number sent by the verification device, and filling an account filling position in the login interface of the browser with the mobile number specifically includes: obtaining the plurality of mobile numbers sent by the verification device; displaying the plurality of mobile numbers in the login interface of the browser; receiving a third preset operation input by the user, where the third preset operation is used to select a target mobile number used as the login account from the plurality of mobile numbers; and filling the account filling position in the login interface of the browser with the target account in response to the third preset operation.

In some embodiments, before the account filling position in the login interface of the browser is filled with the mobile number, the login interface of the browser displays a preset waiting interface (correspondingly shown in FIG. 5C); or the verification information filling position in the login interface of the browser is filled with the verification information, and the login interface of the browser displays a preset waiting interface (correspondingly shown in FIG. 5G).

In some embodiments, when the target manner is logging in to the target website in the SMS message verification manner, the login device obtains the scanning result of the verification device for the QR code image, and provides the login information for the target website by using the browser based on the scanning result. A process of obtaining the code scanning result may include: a login filling plug-in of the login device sends the code scanning notification message to a first connection service module of the login device, where the code scanning notification message includes the QR code image and the identifier corresponding to the target website; the first connection service module sends the code scanning notification message to a second connection service module of the verification device; and after receiving, by using the second connection service module, the code scanning notification message sent by the login device, the verification device indicates, based on the identifier of the target website, a target application APP that is in the verification device and that corresponds to the target website to enable a QR code scanning operation; converts the QR code image into a QR code data stream of a target format, where the target format is consistent with a data stream format obtained when the target APP performs QR code scanning; and then sends the QR code data stream of the target format to the target APP, and obtains a scanning result of the target APP for the QR code image. Then, the verification device sends the code scanning result to the first connection service module of the login device by using the second connection service module. The first connection service module receives the scanning result that is of the QR code image and that is sent by the second connection service module, and sends the scanning result to the login filling plug-in; and the login filling plug-in provides the login information for the target website by using the browser based on the scanning result.

In some embodiments, when the scanning result indicates that scanning performed by the verification device on the QR code image succeeds, the login device may further display first prompt information by using the login interface of the browser, where the first prompt information is used to indicate that the QR code scanning succeeds.

S 1004. Receive a second preset operation, and log in to the target website by using the browser in response to the second preset operation, where the second preset operation is an operation that is input by the user and that is used to confirm login to the target website.

The second preset operation may be an operation of confirming login to the target website on the browser, and may correspond to, for example, the clicking operation on the "Log in/Register" icon shown in FIG. 5I, or the clicking operation on the "Log in" icon in the screen projection window that is of the mobile phone and that is shown in FIG. 6C.

In some embodiments, when the target website is logged in to in a QR code scanning manner, after code scanning performed by the verification device succeeds, the login device may obtain a screen projection window (for example, the screen projection window shown in FIG. 6C) corresponding to a target login interface of the verification device, where the target login interface includes confirmation information for login to the target website; and the login device may receive the second preset operation input by the user for the screen projection window, and log in to the target website in response to the second preset operation.

According to the account login method provided in this embodiment of this application, when a user logs in to an account on a login device, the login device automatically obtains verification information corresponding to the account from a verification device, without requiring the user to manually view the verification information on the verification device and input the verification information to the login device, thereby improving convenience of logging in to the account on the login device and improving user experience.

Based on a same technical idea, an embodiment of this application further provides an electronic device, including: one or more processors; and one or more memories. The one or more memories store one or more computer programs, the one or more computer programs include instructions, and when the instructions are executed by the one or more processors, a computer or the processor is enabled to perform one or more steps in any one of the foregoing methods.

Based on a same technical idea, an embodiment of this application further provides a computer-readable storage medium. The computer-readable storage medium stores computer-executable program instructions, and when the computer-executable program instructions are run on a computer, the computer or a processor is enabled to perform one or more steps in any one of the foregoing methods.

Based on a same technical idea, an embodiment of this application further provides a computer program product including instructions. The computer program product includes computer program code, and when the computer program code is run on a computer, the computer or a processor is enabled to perform one or more steps in any one of the foregoing methods.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any available medium accessible to a computer, or a data storage device such as a server or a data center in which one or more available mediums are integrated. The available medium may be a magnetic medium (such as a floppy disk, a hard disk, or a magnetic tape), an optical medium (such as a DVD), a semiconductor medium (such as a solid state disk (solid state disk, SSD)), or the like.

A person of ordinary skill in the art may understand that all or some of the procedures of the methods in the foregoing embodiments are implemented. The procedures may be completed by a computer program by instructing related hardware. The program may be stored in the computer-readable storage medium. When the program is executed, the procedures in the foregoing method embodiments may be included. The foregoing storage medium includes any medium that can store program code, such as a ROM, a random access memory RAM, a magnetic disk, or an optical disc. The foregoing descriptions are merely specific implementations of the embodiments of this application, but are not intended to limit the protection scope of the embodiments of this application. Any change or replacement within the technical scope disclosed in the embodiments of this application shall fall within the protection scope of the embodiments of this application. Therefore, the protection scope of the embodiments of this application shall be subject to the protection scope of the claims.

## Claims

1. An account login method, applied to a login device, wherein a communication connection is established between the login device and a verification device, and the method comprises:
displaying a login interface of a target website, wherein the login interface is a display interface in a browser of the login device;
receiving (S701) a first preset operation input on the login interface, wherein the first preset operation is used to choose to log in to the target website in an SMS message verification manner;
querying (S702) a mobile number from the verification device in response to the first preset operation, wherein the mobile number is a login account of the target website;
obtaining (S703) the mobile number sent by the verification device, and automatically filling (S704) an account filling position in the login interface of the browser with the mobile number;
sending (S705) a trigger message to a login filling plug-in of the login device, wherein the trigger message is used to indicate that the mobile number has been filled;
querying (S707) verification information corresponding to the target website from the verification device, wherein the verification information is an SMS verification code corresponding to the mobile number;
obtaining (S710) the verification information corresponding to the target website;
filling (S713) a verification information filling position in the login interface of the browser with the verification information;
receiving a second preset operation, and logging in to the target website by using the browser in response to the second preset operation, wherein the second preset operation is an operation that is input by a user and that is used to confirm login to the target website.

2. The method according to claim 1, wherein when there are a plurality of mobile numbers, the obtaining the mobile number sent by the verification device, and filling an account filling position in the login interface of the browser with the mobile number specifically comprises:
obtaining the plurality of mobile numbers sent by the verification device;
displaying a plurality of mobile numbers in the login interface of the browser, wherein the plurality of mobile numbers are the plurality of mobile numbers sent by the verification device;
receiving a third preset operation input by the user, wherein the third preset operation is used to select a target mobile number used as the login account from the plurality of mobile numbers; and
filling the account filling position in the login interface of the browser with the target mobile number in response to the third preset operation.

3. The method according to claim 2, wherein the method further comprises:
before the account filling position in the login interface of the browser is filled with the mobile number, displaying, by the login interface of the browser, a preset waiting interface; or
filling the verification information filling position in the login interface of the browser with the verification information, and displaying, by the login interface of the browser, a preset waiting interface.

4. The method according to claim 1, wherein when the target manner further comprises a QR code scanning manner, and the method further comprises:
obtaining (S802) a corresponding QR code image in response to the first preset operation in which the user chooses to log in to the target website in the QR code scanning manner;
sending (S804) a code scanning notification message to the verification device, wherein the code scanning notification message comprises the QR code image and an identifier corresponding to the target website; and
obtaining (S808) a scanning result of the verification device for the QR code image, and providing a login information for the target website by using the browser based on the scanning result.

5. The method according to claim 4, wherein the method further comprises:
when the scanning result indicates that scanning performed by the verification device on the QR code image succeeds, displaying first prompt information by using the login interface of the browser, wherein the first prompt information is used to indicate that the QR code scanning succeeds.

6. The method according to claim 1, wherein the receiving a second preset operation, and logging in to the target website by using the browser in response to the second preset operation specifically comprises:
obtaining a screen projection window corresponding to a target login interface of the verification device, wherein the target login interface comprises confirmation information for login to the target website; and
receiving the second preset operation input by the user for the screen projection window, and logging in to the target website in response to the second preset operation.

7. The method according to claim 1, wherein the login device comprises the login filling plug-in, the browser, a first SMS message service module, and a first connection service module, and the method further comprises:
when the user logs in to the target website by using the browser of the login device, receiving, by the login filling plug-in, the first preset operation input by the user, wherein the first preset operation is used to choose to log in to the target website in the target manner;
querying, by the login filling plug-in, the login information corresponding to the target website from the first connection service module in response to the first preset operation;
querying, by the first connection service module, the login information from the verification device;
obtaining, by the first connection service module, the login information sent by the verification device, and sending the login information to the login filling plug-in;
sending, by the login filling plug-in, the login information to the browser, and providing the login information for the target website by using the browser; and
receiving, by the browser, the second preset operation input by the user, and logging in to the target website in response to the second preset operation.

8. The method according to claim 7, wherein when the target manner is logging in to the target website in the SMS message verification manner, the method further comprises:
querying, by the login filling plug-in, a mobile number from the first connection service module in response to the first preset operation in which the user chooses to log in to the target website in the SMS message verification manner;
querying, by the first connection service module, the mobile number from the verification device;
obtaining, by the first connection service module, the mobile number sent by the verification device, and sending the mobile number to the login filling plug-in;
filling, by the login filling plug-in, an account filling position in the login interface of the browser with the mobile number;
triggering, by the browser, the login filling plug-in to query verification information corresponding to the target website;
querying, by the login filling plug-in, the verification information from the first SMS message service module;
querying, by the first SMS message service module, the verification information from the verification device by using the first connection service module;
obtaining, by the first connection service module, the verification information that corresponds to the target website and that is sent by a second connection service module of the verification device, and sending the verification information to the login filling plug-in by using the first SMS message service module; and
filling, by the login filling plug-in, a verification information filling position in the login interface of the browser with the verification information.

9. The method according to claim 8, wherein when there are a plurality of mobile numbers, the obtaining the mobile number sent by the verification device, and filling an account filling position in the login interface of the browser with the mobile number specifically comprises:
obtaining, by the login filling plug-in, the plurality of mobile numbers sent by the verification device;
sending, by the login filling plug-in, a plurality of mobile numbers to the browser, and displaying the plurality of mobile numbers in the login interface of the browser, wherein the plurality of mobile numbers are the plurality of mobile numbers sent by the verification device;
receiving, by the login filling plug-in, a third preset operation input by the user, wherein the third preset operation is used to select a target mobile number used as a login account from the plurality of mobile numbers; and
filling, by the login filling plug-in, the account filling position in the login interface of the browser with the target mobile number in response to the third preset operation.

10. The method according to claim 1, wherein
filling an account filling position in the login interface of the browser with the mobile number comprises: filling an account filling position in the login interface of the browser with the mobile number automatically;
filling a verification information filling position in the login interface of the browser with the verification information comprises: filling a verification information filling position in the login interface of the browser with the verification information automatically.

11. The method according to claim 1, wherein part or all of the mobile number is displayed.

12. An account login system, wherein the system comprises a login device and a mobile phone, and a communication connection is established between the login device and the mobile phone; wherein the login device is configured to perform the method according to any one of claims 1 to 11.

13. An electronic device, comprising:
one or more processors; and
one or more memories, wherein
the one or more memories store one or more computer programs, the one or more computer programs comprise instructions, and when the instructions are executed by the one or more processors, the electronic device is enabled to perform the method according to any one of claims 1 to 11.

14. A computer-readable storage medium, wherein the computer-readable storage medium stores computer-executable program instructions, and when the computer-executable program instructions are run on a computer, the computer is enabled to perform the method according to any one of claims 1 to 11.

## Patentansprüche

1. Ein Kontoanmeldungsverfahren, angewendet auf ein Anmeldegerät, wobei eine Kommunikationsverbindung zwischen dem Anmeldegerät und einem Verifizierungsgerät hergestellt wird, und das Verfahren umfasst:
Anzeige einer Anmeldeschnittstelle einer Zielwebsite, wobei die Anmeldeschnittstelle eine Anzeigeoberfläche in einem Browser des Anmeldegeräts ist;
Empfangen (S701) einer ersten voreingestellten Bedienungseingabe auf der Anmeldeschnittstelle, wobei die erste voreingestellte Bedienung verwendet wird, um die Anmeldung bei der Zielwebsite auf eine SMS-Nachrichten-Verifizierungsweise auszuwählen;
Abfragen (S702) einer Mobilnummer vom Verifizierungsgerät als Reaktion auf die erste voreingestellte Bedienung, wobei die Mobilnummer ein Anmeldekonto der Zielwebsite ist;
Abrufen (S703) der vom Verifizierungsgerät gesendeten Mobilnummer und automatisches Ausfüllen (S704) einer Kontoausfüllposition in der Anmeldeschnittstelle des Browsers mit der Mobilnummer;
Senden (S705) einer Auslösemeldung an ein Anmeldeausfüll-Plug-in des Anmeldegeräts, wobei die Auslösemeldung verwendet wird, um anzuzeigen, dass die Mobilnummer ausgefüllt wurde;
Abfragen (S707) von Verifizierungsinformationen, die der Zielwebsite entsprechen, vom Verifizierungsgerät, wobei die Verifizierungsinformationen ein SMS-Verifizierungscode sind, der der Mobilnummer entspricht;
Abrufen (S710) der Verifizierungsinformationen, die der Zielwebsite entsprechen;
Ausfüllen (S713) einer Verifizierungsinformationsausfüllposition in der Anmeldeschnittstelle des Browsers mit den Verifizierungsinformationen;
Empfangen einer zweiten voreingestellten Bedienung und Anmeldung bei der Zielwebsite unter Verwendung des Browsers als Reaktion auf die zweite voreingestellte Bedienung, wobei die zweite voreingestellte Bedienung eine vom Benutzer eingegebene Bedienung ist, die verwendet wird, um die Anmeldung bei der Zielwebsite zu bestätigen.

2. Das Verfahren gemäß Anspruch 1, wobei, wenn es mehrere Mobilnummern gibt, das Abrufen der vom Verifizierungsgerät gesendeten Mobilnummer und das Ausfüllen einer Kontoausfüllposition in der Anmeldeschnittstelle des Browsers mit der Mobilnummer speziell umfasst:
Abrufen der vom Verifizierungsgerät gesendeten mehreren Mobilnummern;
Anzeige mehrerer Mobilnummern in der Anmeldeschnittstelle des Browsers, wobei die mehreren Mobilnummern die vom Verifizierungsgerät gesendeten Mobilnummern sind;
Empfangen einer dritten voreingestellten Bedienung, die vom Benutzer eingegeben wird, wobei die dritte voreingestellte Bedienung verwendet wird, um eine Zielmobilnummer auszuwählen, die als Anmeldekonto aus den mehreren Mobilnummern verwendet wird; und
Das Ausfüllen der Kontoposition im Anmeldeinterface des Browsers mit der Zielmobilnummer als Reaktion auf die dritte voreingestellte Operation.

3. Das Verfahren gemäß Anspruch 2, wobei das Verfahren weiterhin umfasst:
Vor dem Ausfüllen der Kontoposition im Anmeldeinterface des Browsers mit der Mobilnummer wird durch das Anmeldeinterface des Browsers ein voreingestelltes Warteinterface angezeigt; oder
Das Ausfüllen der Verifizierungsinformationsposition im Anmeldeinterface des Browsers mit den Verifizierungsinformationen und das Anzeigen eines voreingestellten Warteinterfaces durch das Anmeldeinterface des Browsers.

4. Das Verfahren gemäß Anspruch 1, wobei die Zielmethode weiterhin eine QR-Code-Scan-Methode umfasst, und das Verfahren weiterhin umfasst:
Das Abrufen (S802) eines entsprechenden QR-Code-Bildes als Reaktion auf die erste voreingestellte Operation, bei der der Benutzer wählt, sich auf der Zielwebsite mit der QR-Code-Scan-Methode anzumelden;
Das Senden (S804) einer Code-Scan-Benachrichtigungsnachricht an das Verifizierungsgerät, wobei die Code-Scan-Benachrichtigungsnachricht das QR-Code-Bild und einen Bezeichner enthält, der der Zielwebsite entspricht; und
Das Abrufen (S808) eines Scanergebnisses des Verifizierungsgeräts für das QR-Code-Bild und das Bereitstellen von Anmeldeinformationen für die Zielwebsite durch den Browser basierend auf dem Scanergebnis.

5. Das Verfahren gemäß Anspruch 4, wobei das Verfahren weiterhin umfasst:
Wenn das Scanergebnis anzeigt, dass das Scannen des QR-Code-Bildes durch das Verifizierungsgerät erfolgreich ist, wird durch das Anmeldeinterface des Browsers eine erste Eingabeaufforderung angezeigt, die darauf hinweist, dass das QR-Code-Scannen erfolgreich ist.

6. Das Verfahren gemäß Anspruch 1, wobei das Empfangen einer zweiten voreingestellten Operation und das Anmelden auf der Zielwebsite durch den Browser als Reaktion auf die zweite voreingestellte Operation speziell umfasst:
Das Abrufen eines Bildschirmprojektionsfensters, das dem Zielanmeldeinterface des Verifizierungsgeräts entspricht, wobei das Zielanmeldeinterface Bestätigungsinformationen für die Anmeldung auf der Zielwebsite enthält; und
Das Empfangen der zweiten voreingestellten Operation, die vom Benutzer für das Bildschirmprojektionsfenster eingegeben wurde, und das Anmelden auf der Zielwebsite als Reaktion auf die zweite voreingestellte Operation.

7. Das Verfahren gemäß Anspruch 1, wobei das Anmeldegerät das Anmeldeausfüll-Plugin, den Browser, ein erstes SMS-Nachrichtendienstmodul und ein erstes Verbindungsdienstmodul umfasst, und das Verfahren weiterhin umfasst:
Wenn der Benutzer sich mit dem Browser des Anmeldegeräts auf der Zielwebsite anmeldet, empfängt das Anmeldeausfüll-Plugin die erste voreingestellte Aktion, die vom Benutzer eingegeben wurde, wobei die erste voreingestellte Aktion dazu dient, die Anmeldung auf der Zielwebsite auf die Zielweise auszuwählen;
Abfragen des Anmeldeausfüll-Plugins nach den Anmeldeinformationen, die der Zielwebsite entsprechen, aus dem ersten Verbindungsdienstmodul als Reaktion auf die erste voreingestellte Aktion;
Abfragen des ersten Verbindungsdienstmoduls nach den Anmeldeinformationen vom Verifizierungsgerät;
Empfangen der Anmeldeinformationen, die vom Verifizierungsgerät gesendet wurden, durch das erste Verbindungsdienstmodul und Senden der Anmeldeinformationen an das Anmeldeausfüll-Plugin;
Senden der Anmeldeinformationen durch das Anmeldeausfüll-Plugin an den Browser und Bereitstellen der Anmeldeinformationen für die Zielwebsite mithilfe des Browsers; und
Empfangen der zweiten voreingestellten Aktion, die vom Benutzer eingegeben wurde, durch den Browser und Anmelden auf der Zielwebsite als Reaktion auf die zweite voreingestellte Aktion.

8. Das Verfahren gemäß Anspruch 7, wobei, wenn die Zielweise die Anmeldung auf der Zielwebsite im SMS-Nachrichten-Verifizierungsmodus ist, das Verfahren weiterhin umfasst:
Abfragen einer Mobilnummer durch das Anmeldeausfüll-Plugin aus dem ersten Verbindungsdienstmodul als Reaktion auf die erste voreingestellte Aktion, bei der der Benutzer die Anmeldung auf der Zielwebsite im SMS-Nachrichten-Verifizierungsmodus auswählt;
Abfragen der Mobilnummer durch das erste Verbindungsdienstmodul vom Verifizierungsgerät;
Empfangen der Mobilnummer, die vom Verifizierungsgerät gesendet wurde, durch das erste Verbindungsdienstmodul und Senden der Mobilnummer an das Anmeldeausfüll-Plugin;
Ausfüllen einer Kontoausfüllposition in der Anmeldeoberfläche des Browsers mit der Mobilnummer durch das Anmeldeausfüll-Plugin;
Auslösen des Anmeldeausfüll-Plugins durch den Browser, um Verifizierungsinformationen abzufragen, die der Zielwebsite entsprechen;
Abfragen der Verifizierungsinformationen durch das Anmeldeausfüll-Plugin aus dem ersten SMS-Nachrichtendienstmodul;
Abfragen der Verifizierungsinformationen durch das erste SMS-Nachrichtendienstmodul vom Verifizierungsgerät mithilfe des ersten Verbindungsdienstmoduls;
Empfangen der Verifizierungsinformationen, die der Zielwebsite entsprechen und die von einem zweiten Verbindungsdienstmodul des Verifizierungsgeräts gesendet wurden, durch das erste Verbindungsdienstmodul und Senden der Verifizierungsinformationen an das Anmeldeausfüll-Plugin mithilfe des ersten SMS-Nachrichtendienstmoduls; und
Ausfüllen einer Verifizierungsinformationsfüllposition in der Anmeldeoberfläche des Browsers mit den Verifizierungsinformationen durch das Anmeldefüll-Plugin.

9. Das Verfahren gemäß Anspruch 8, wobei, wenn es mehrere Mobilnummern gibt, das Empfangen der von der Verifizierungseinrichtung gesendeten Mobilnummer und das Ausfüllen einer Kontofüllposition in der Anmeldeoberfläche des Browsers mit der Mobilnummer speziell umfasst:
Empfangen der von der Verifizierungseinrichtung gesendeten mehreren Mobilnummern durch das Anmeldefüll-Plugin;
Senden der mehreren Mobilnummern durch das Anmeldefüll-Plugin an den Browser und Anzeigen der mehreren Mobilnummern in der Anmeldeoberfläche des Browsers, wobei die mehreren Mobilnummern die von der Verifizierungseinrichtung gesendeten Mobilnummern sind;
Empfangen einer dritten voreingestellten Benutzeroperation durch das Anmeldefüll-Plugin, wobei die dritte voreingestellte Operation dazu dient, eine Zielmobilnummer auszuwählen, die als Anmeldekonto aus den mehreren Mobilnummern verwendet wird; und
Ausfüllen der Kontofüllposition in der Anmeldeoberfläche des Browsers mit der Zielmobilnummer durch das Anmeldefüll-Plugin als Reaktion auf die dritte voreingestellte Operation.

10. Das Verfahren gemäß Anspruch 1, wobei
Das Ausfüllen einer Kontofüllposition in der Anmeldeoberfläche des Browsers mit der Mobilnummer umfasst: Automatisches Ausfüllen einer Kontofüllposition in der Anmeldeoberfläche des Browsers mit der Mobilnummer;
Das Ausfüllen einer Verifizierungsinformationsfüllposition in der Anmeldeoberfläche des Browsers mit den Verifizierungsinformationen umfasst: Automatisches Ausfüllen einer Verifizierungsinformationsfüllposition in der Anmeldeoberfläche des Browsers mit den Verifizierungsinformationen.

11. Das Verfahren gemäß Anspruch 1, wobei ein Teil oder die gesamte Mobilnummer angezeigt wird.

12. Ein Kontoanmeldesystem, wobei das System ein Anmeldegerät und ein Mobiltelefon umfasst und eine Kommunikationsverbindung zwischen dem Anmeldegerät und dem Mobiltelefon hergestellt wird; wobei das Anmeldegerät konfiguriert ist, das Verfahren gemäß einem der Ansprüche 1 bis 11 auszuführen.

13. Ein elektronisches Gerät, umfassend:
Einen oder mehrere Prozessoren; und
Einen oder mehrere Speicher, wobei
Die einen oder mehrere Speicher speichern ein oder mehrere Computerprogramme, die ein oder mehrere Computerprogramme Anweisungen umfassen, und wenn die Anweisungen von den einen oder mehreren Prozessoren ausgeführt werden, wird das elektronische Gerät befähigt, das Verfahren gemäß einem der Ansprüche 1 bis 11 auszuführen.

14. Ein computerlesbares Speichermedium, wobei das computerlesbare Speichermedium computer-ausführbare Programmanweisungen speichert und wenn die computer-ausführbaren Programmanweisungen auf einem Computer ausgeführt werden, der Computer in die Lage versetzt wird, das Verfahren gemäß einem der Ansprüche 1 bis 11 auszuführen.

## Revendications

1. Une méthode de connexion à un compte, appliquée à un dispositif de connexion, où une connexion de communication est établie entre le dispositif de connexion et un dispositif de vérification, et la méthode comprend :
afficher une interface de connexion d'un site web cible, où l'interface de connexion est une interface d'affichage dans un navigateur du dispositif de connexion ;
recevoir (S701) une première opération prédéfinie sur l'interface de connexion, où la première opération prédéfinie est utilisée pour choisir de se connecter au site web cible par une méthode de vérification par message SMS ;
interroger (S702) un numéro de mobile à partir du dispositif de vérification en réponse à la première opération prédéfinie, où le numéro de mobile est un compte de connexion du site web cible ;
obtenir (S703) le numéro de mobile envoyé par le dispositif de vérification, et remplir automatiquement (S704) une position de remplissage de compte dans l'interface de connexion du navigateur avec le numéro de mobile ;
envoyer (S705) un message de déclenchement à un plug-in de remplissage de connexion du dispositif de connexion, où le message de déclenchement est utilisé pour indiquer que le numéro de mobile a été rempli ;
interroger (S707) les informations de vérification correspondant au site web cible à partir du dispositif de vérification, où les informations de vérification sont un code de vérification SMS correspondant au numéro de mobile ;
obtenir (S710) les informations de vérification correspondant au site web cible ;
remplir (S713) une position de remplissage des informations de vérification dans l'interface de connexion du navigateur avec les informations de vérification ;
recevoir une deuxième opération prédéfinie, et se connecter au site web cible en utilisant le navigateur en réponse à la deuxième opération prédéfinie, où la deuxième opération prédéfinie est une opération saisie par un utilisateur et utilisée pour confirmer la connexion au site web cible.

2. La méthode selon la revendication 1, où lorsqu'il y a une pluralité de numéros de mobile, l'obtention du numéro de mobile envoyé par le dispositif de vérification, et le remplissage d'une position de remplissage de compte dans l'interface de connexion du navigateur avec le numéro de mobile comprend spécifiquement :
obtenir la pluralité de numéros de mobile envoyés par le dispositif de vérification ;
afficher une pluralité de numéros de mobile dans l'interface de connexion du navigateur, où la pluralité de numéros de mobile sont les numéros de mobile envoyés par le dispositif de vérification ;
recevoir une troisième opération prédéfinie saisie par l'utilisateur, où la troisième opération prédéfinie est utilisée pour sélectionner un numéro de mobile cible utilisé comme compte de connexion parmi la pluralité de numéros de mobile ; et
remplir la position de remplissage du compte dans l'interface de connexion du navigateur avec le numéro de mobile cible en réponse à la troisième opération prédéfinie.

3. Le procédé selon la revendication 2, dans lequel le procédé comprend en outre :
avant que la position de remplissage du compte dans l'interface de connexion du navigateur soit remplie avec le numéro de mobile, afficher, par l'interface de connexion du navigateur, une interface d'attente prédéfinie ; ou
remplir la position de remplissage des informations de vérification dans l'interface de connexion du navigateur avec les informations de vérification, et afficher, par l'interface de connexion du navigateur, une interface d'attente prédéfinie.

4. Le procédé selon la revendication 1, dans lequel lorsque la manière cible comprend en outre une manière de balayage de code QR, le procédé comprend en outre :
obtenir (S802) une image de code QR correspondante en réponse à la première opération prédéfinie dans laquelle l'utilisateur choisit de se connecter au site web cible par la manière de balayage de code QR ;
envoyer (S804) un message de notification de balayage de code au dispositif de vérification, dans lequel le message de notification de balayage de code comprend l'image de code QR et un identifiant correspondant au site web cible ; et
obtenir (S808) un résultat de balayage du dispositif de vérification pour l'image de code QR, et fournir des informations de connexion pour le site web cible en utilisant le navigateur basé sur le résultat de balayage.

5. Le procédé selon la revendication 4, dans lequel le procédé comprend en outre :
lorsque le résultat de balayage indique que le balayage effectué par le dispositif de vérification sur l'image de code QR réussit, afficher les premières informations de notification en utilisant l'interface de connexion du navigateur, dans lequel les premières informations de notification sont utilisées pour indiquer que le balayage de code QR réussit.

6. Le procédé selon la revendication 1, dans lequel la réception d'une deuxième opération prédéfinie, et la connexion au site web cible en utilisant le navigateur en réponse à la deuxième opération prédéfinie comprend spécifiquement :
obtenir une fenêtre de projection d'écran correspondant à une interface de connexion cible du dispositif de vérification, dans laquelle l'interface de connexion cible comprend des informations de confirmation pour la connexion au site web cible ; et
recevoir la deuxième opération prédéfinie saisie par l'utilisateur pour la fenêtre de projection d'écran, et se connecter au site web cible en réponse à la deuxième opération prédéfinie.

7. Le procédé selon la revendication 1, dans lequel le dispositif de connexion comprend le plug-in de remplissage de connexion, le navigateur, un premier module de service de message SMS, et un premier module de service de connexion, et le procédé comprend en outre :
lorsque l'utilisateur se connecte au site web cible en utilisant le navigateur de l'appareil de connexion, le plug-in de remplissage de connexion reçoit la première opération prédéfinie saisie par l'utilisateur, où la première opération prédéfinie est utilisée pour choisir de se connecter au site web cible de la manière cible ;
le plug-in de remplissage de connexion interroge les informations de connexion correspondant au site web cible à partir du premier module de service de connexion en réponse à la première opération prédéfinie ;
le premier module de service de connexion interroge les informations de connexion à partir de l'appareil de verification ;
le premier module de service de connexion obtient les informations de connexion envoyées par l'appareil de vérification et les envoie au plug-in de remplissage de connexion ;
le plug-in de remplissage de connexion envoie les informations de connexion au navigateur et fournit les informations de connexion au site web cible en utilisant le navigateur ; et
le navigateur reçoit la deuxième opération prédéfinie saisie par l'utilisateur et se connecte au site web cible en réponse à la deuxième opération prédéfinie.

8. Le procédé selon la revendication 7, où lorsque la manière cible consiste à se connecter au site web cible par la méthode de vérification par message SMS, le procédé comprend en outre :
le plug-in de remplissage de connexion interroge un numéro de mobile à partir du premier module de service de connexion en réponse à la première opération prédéfinie dans laquelle l'utilisateur choisit de se connecter au site web cible par la méthode de vérification par message SMS ;
le premier module de service de connexion interroge le numéro de mobile à partir de l'appareil de verification ;
le premier module de service de connexion obtient le numéro de mobile envoyé par l'appareil de vérification et l'envoie au plug-in de remplissage de connexion ;
le plug-in de remplissage de connexion remplit une position de remplissage de compte dans l'interface de connexion du navigateur avec le numéro de mobile ;
le navigateur déclenche le plug-in de remplissage de connexion pour interroger les informations de vérification correspondant au site web cible ;
le plug-in de remplissage de connexion interroge les informations de vérification à partir du premier module de service de message SMS ;
le premier module de service de message SMS interroge les informations de vérification à partir de l'appareil de vérification en utilisant le premier module de service de connexion ;
le premier module de service de connexion obtient les informations de vérification correspondant au site web cible et envoyées par un deuxième module de service de connexion de l'appareil de vérification, et envoie les informations de vérification au plug-in de remplissage de connexion en utilisant le premier module de service de message SMS ; et
remplissage, par le plug-in de remplissage de connexion, d'une position de remplissage d'informations de vérification dans l'interface de connexion du navigateur avec les informations de vérification.

9. Le procédé selon la revendication 8, dans lequel, lorsqu'il y a plusieurs numéros de téléphone mobile, l'obtention du numéro de téléphone mobile envoyé par le dispositif de vérification et le remplissage d'une position de remplissage de compte dans l'interface de connexion du navigateur avec le numéro de téléphone mobile comprend spécifiquement :
obtention, par le plug-in de remplissage de connexion, des plusieurs numéros de téléphone mobile envoyés par le dispositif de vérification ;
envoi, par le plug-in de remplissage de connexion, de plusieurs numéros de téléphone mobile au navigateur, et affichage des plusieurs numéros de téléphone mobile dans l'interface de connexion du navigateur, où les plusieurs numéros de téléphone mobile sont les plusieurs numéros de téléphone mobile envoyés par le dispositif de vérification ;
réception, par le plug-in de remplissage de connexion, d'une troisième opération prédéfinie entrée par l'utilisateur, où la troisième opération prédéfinie est utilisée pour sélectionner un numéro de téléphone mobile cible utilisé comme compte de connexion parmi les plusieurs numéros de téléphone mobile ; et
remplissage, par le plug-in de remplissage de connexion, de la position de remplissage de compte dans l'interface de connexion du navigateur avec le numéro de téléphone mobile cible en réponse à la troisième opération prédéfinie.

10. Le procédé selon la revendication 1, dans lequel
le remplissage d'une position de remplissage de compte dans l'interface de connexion du navigateur avec le numéro de téléphone mobile comprend : le remplissage d'une position de remplissage de compte dans l'interface de connexion du navigateur avec le numéro de téléphone mobile automatiquement ;
le remplissage d'une position de remplissage d'informations de vérification dans l'interface de connexion du navigateur avec les informations de vérification comprend : le remplissage d'une position de remplissage d'informations de vérification dans l'interface de connexion du navigateur avec les informations de vérification automatiquement.

11. Le procédé selon la revendication 1, dans lequel une partie ou la totalité du numéro de téléphone mobile est affichée.

12. Un système de connexion de compte, dans lequel le système comprend un dispositif de connexion et un téléphone mobile, et une connexion de communication est établie entre le dispositif de connexion et le téléphone mobile ; dans lequel le dispositif de connexion est configuré pour exécuter le procédé selon l'une quelconque des revendications 1 à 11.

13. Un dispositif électronique, comprenant :
un ou plusieurs processeurs ; et
une ou plusieurs mémoires, dans lesquelles
les une ou plusieurs mémoires stockent un ou plusieurs programmes informatiques, les un ou plusieurs programmes informatiques comprennent des instructions, et lorsque les instructions sont exécutées par les un ou plusieurs processeurs, le dispositif électronique est activé pour exécuter le procédé selon l'une quelconque des revendications 1 à 11.

14. Un support de stockage lisible par ordinateur, dans lequel le support de stockage lisible par ordinateur stocke des instructions de programme exécutables par ordinateur, et lorsque les instructions de programme exécutables par ordinateur sont exécutées sur un ordinateur, l'ordinateur est capable d'exécuter la méthode selon l'une quelconque des revendications 1 à 11.
